# EUROPEAN PATENT SPECIFICATION

(11) **EP 1 553 041 B1**
(45) Date of publication and mention of the grant of the patent: **20.02.2013**
(21) Application number: 02808021.6
(22) Date of filing: 16.10.2002
(51) Int. Cl.: B66B 25/00

(54) **CONTROLLER OF PASSENGER CONVEYOR**
STEUERUNG FÜR EIN PERSONENBEFÖRDERUNGSSYSTEM
CONTROLEUR DE SYSTEME TRANSPORTEUSE POUR PERSONNES

(43) Date of publication of application: 13.07.2005
(73) Proprietor: MITSUBISHI DENKI KABUSHIKI KAISHA, Chiyoda-ku Tokyo 100-8310 (JP)
(72) Inventor: HARUTA, Yasumasa, c/o Mitsubishi Denki K.K., Tokyo 100-8310 (JP)
(74) Representative: HOFFMANN EITLE
(86) International application number: PCT/JP2002/010760
(87) International publication number: WO 2004/035453

(56) References cited:
- WO-A1-00/69766
- DE-A1- 19 540 415
- JP-A- 6 100 279
- JP-A- 8 099 791
- JP-A- 2001 302 163
- JP-A- 2002 160 884
- US-A- 6 049 189
- US-A1- 2001 002 644

## Description

### Technical Field

The present invention relates to a control device for a passenger conveyor by which a passenger conveyor such as an escalator or a moving walk, etc. is operated economically to save energy by reducing speed or stopping the passenger conveyor.

### Background Art

Heretofore, generally, passenger conveyors such as escalators or moving walks have been operated always at a constant speed, regardless of the volume of traffic.

However, the volume of traffic changes from time to time, thus it is desirable that the passenger conveyor be operated in a condition suitable for the volume of traffic.

For example, in Japanese non-examined laid-open patent publication No. Sho 57-72581, there is disclosed a control device for a passenger conveyor which operates without lowering service to passengers by operating a passenger conveyor at a low speed when there are no passengers and at a normal speed when a passengeris detected, and operates the passenger conveyor economically by eliminating unnecessary operation when there are no passengers.

Also, in Japanese examined patent publication No. Sho 61-57274, there is disclosed a control device for a passenger conveyor which comprises a passenger detecting device that starts operation when a passenger gets on a step and a passerby detecting device that has as its range of detection a range larger than the range of detection of the passenger detecting device, and which stops the escalator if neither of the devices functions, operates at low speed if the passerby detecting device functions, and operates at a normal speed if the passenger detecting device functions. That is, the passenger conveyor is operated economically by saving energy by stopping the passenger conveyor when there are no passengers, and by informing passersby that it is in operation when a passerby is detected near the passenger conveyor, in order not to lower service.

Furthermore, in Japanese examined patent publication No. Hei 5-5752, there is disclosed a control device for an escalator of which an induction motor is energized by an AC power supply of variable voltage and variable frequency, and which operates the escalator at a low speed when no passengers are detected, and gradually increases frequency to operate at a high speed when a passengers is detected. As a result of this, the switchover from low speed to high speed is carried out smoothly, along with increasing efficiency during low speed operation, so no shock will be given to passengers..

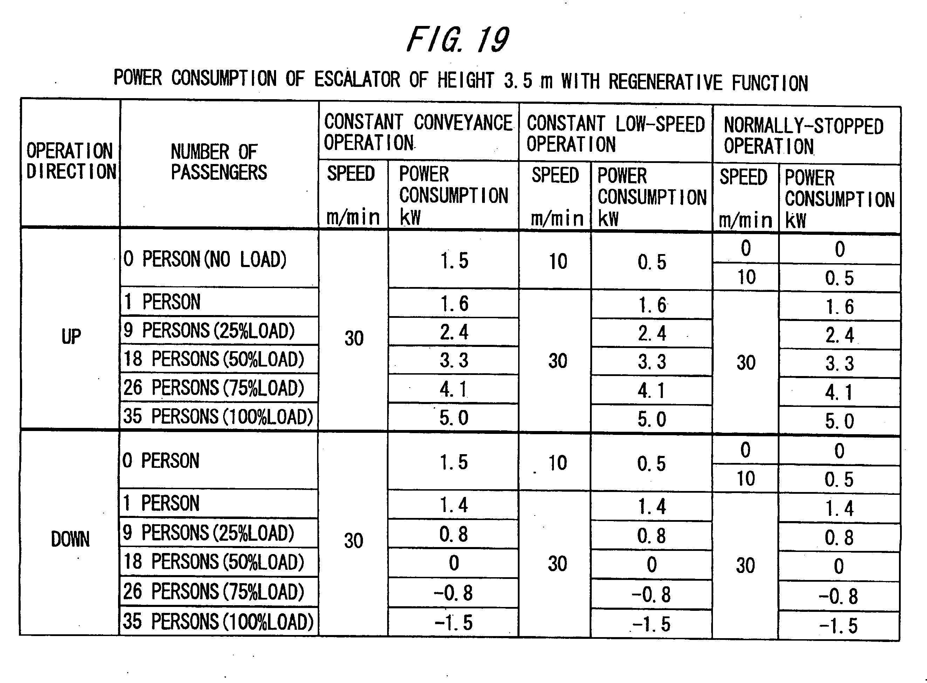

Here, Figure 19 shows an example of power consumptions in operations in the UP and DOWN directions of an escalator provided between floors of a height of 3.5 meters, in the case of automatic constant conveyance operation that operates always at the rated speed, in the case of automatic constant low-speed operation that operates normally at a low speed and switches to the rated speed when a passenger is detected, and in the case of automatic normally-stopped operation that is normally stopped and switches to the rated speed when a passenger is detected.

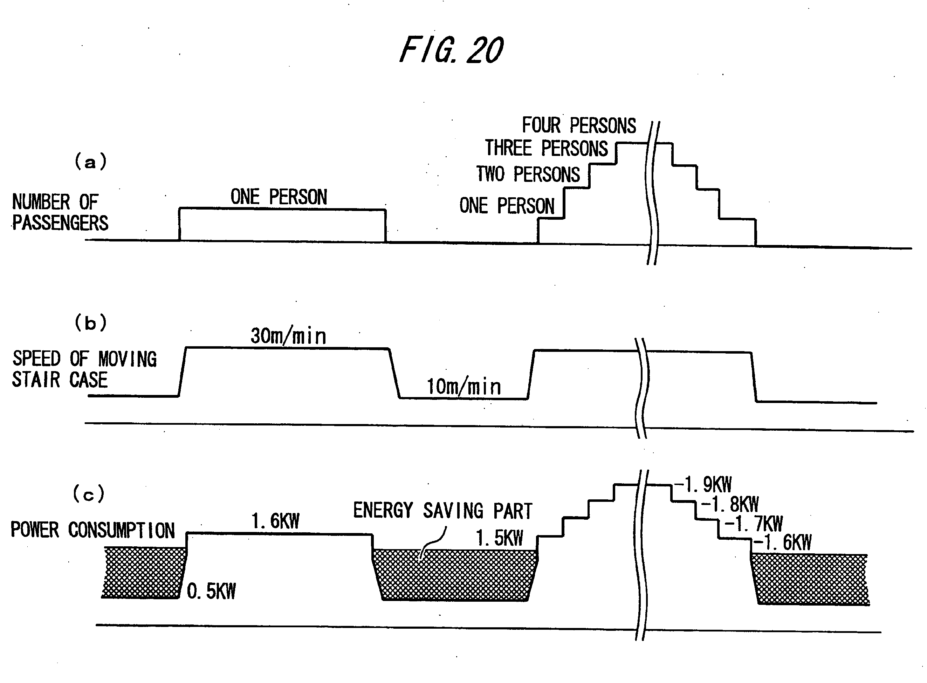

Figure 20 refers to an automatic constant low-speed operation escalator that is normally operated at a low speed of 10m/min and operated at a high speed of 30m/min during conveyance, of which Figure 20(a) in the Figure shows the number of passengers when four passengers get on successively after a first passenger has been conveyed, Figure 20(b) shows the step speed of the escalator according to the aforementioned volume of traffic in the aforementioned situation, and Figure 20(c) shows the energy saving amount in the automatic constant low-speed operation compared with the energy saving amount in the automatic constant conveyance operation, by calculating the power consumption in the automatic constant low-speed operation in accordance with Figure 19.

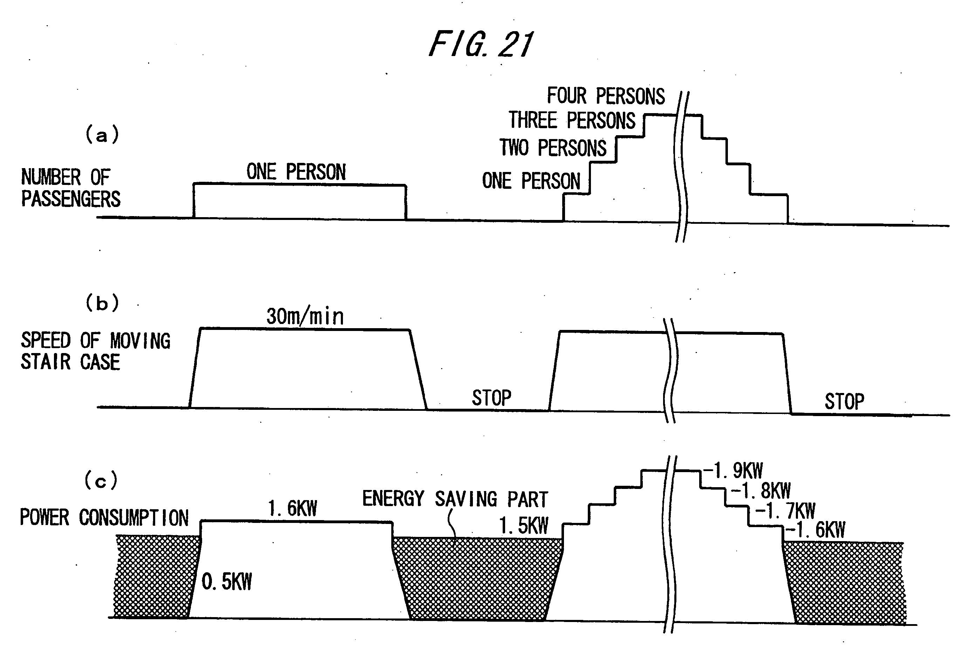

Figure 21 refers to an automatic normally-stopped escalator, of which Figure 21(a) shows the same number of passengers as in Figure 20, Figure 21(b) shows the step speed of the escalator, and Figure 21(c) shows the power consumption calculated in accordance with Figure 19, and the energy saving amount in the automatic normally-stopped operation compared with the energy saving amount in the automatic constant conveyance operation.

Meanwhile, there is a wide range in the installation place of passenger conveyors, and the usage thereof has a large variety. As examples:
A) In a crowded station, during the period when passengers go to work, a passenger conveyor is almost always in service.
B) In a relatively slack station, during the period when passengers go to work, passengers appear in ones and twos continuously in tens of seconds and use a passenger conveyor.
C) In the middle of the night in a station, passengers concentrate at arrival and departure times of trains, and a passenger conveyor is used about once in a few minutes.
D) At shopping centers on holidays, passengers appear in ones and twos continuously in tens of seconds during opening hours and use a passenger conveyor.
E) At shopping centers on weekdays, a passenger conveyor is used about once in a few minutes during opening hours.
can be given.

In the case of the aforementioned case A, a passenger conveyor is always in automatic constant conveyance operation, and energy saving can hardly be attempted. However, the volume of traffic changes depending on the period of time, so there are gaps between the usages of the passenger conveyor by the passengers during a normal period of time after the period that passengers go to work passes. During these periods, energy saving can be aimed by operating the passenger conveyor in automatic constant low-speed operation or in automatic normally-stopped operation. ,

In automatic constant low-speed operation, as the passenger conveyor is always moving at a low speed, it is possible to tell whether or not the passenger conveyor is in operation. Therefore, service to the passengers is not lowered, but less energy saving effect is achieved compared with automatic normally-stopped operation.

Accordingly, the automatic constant low-speed operation is suitable in cases where importance is attached more on service than on energy saving, such as the aforementioned case B, i.e. in a station during the period that passengers go to work, or the aforementioned case D, i.e. at a shopping center on holidays, however, it is not suitable in cases where importance should be attached more on energy saving than on service, such as the aforementioned case C, i.e. in the middle of the night in a station, or the aforementioned case E, i.e. at shopping centers on weekdays.

On the other hand, in automatic normally-stopped operation, as the passenger conveyor is normally stopped, high energy saving effect can be achieved, however, it is prone to be misunderstood that the passenger conveyor cannot be used, and also because the operation direction is unclear, there is the necessity of providing an indicator and a directional lamp at the gate sides.

However, as a passenger normally looks at the passenger conveyor to judge whether or not the passenger conveyor is in operation and the direction thereof, so lowering of convenience is inevitable, even if an indicator is provided.

Therefore, automatic normally-stopped operation is suitable particularly in cases where a passenger-less state continues for a long period of time and a high energy saving effect can be achieved by being operated in that operation, such as the state in the aforementioned case C i.e. in the middle of the night in the station, or in the aforementioned case E i.e. at shopping centers on holidays, and it is not suitable in cases where importance should be attached more on service than on energy saving, such as the aforementioned case B, i.e. in a station during the period passengers go to work and little energy saving effect can be achieved due to the large number of passengers, or the aforementioned case D, i.e. in a shopping center on holidays where importance should be attached more on service than on energy saving.

As described above, in order to efficiently operate a passenger conveyor which can switch to and from automatic constant conveyance operation to and from either automatic constant low-speed operation or automatic normally-stopped operation, it is necessary to grasp the situation of the usage of the passengers and the amount of energy consumption.

However, regarding a conventional passenger conveyor, as the situation of the usage of the passengers or the energy consumption were not grasped, even if the passenger conveyor was equipped with automatic constant low-speed operation or automatic normally-stopped operation features, there was the problem that inter-switching to the operation suitable for the traffic condition was not realized, thus lowering service and/or not achieving enough energy saving effect.

The present invention was devised to solve problems such as those mentioned above, and has as its object to provide a control device for a passenger conveyor that is possible of achieving efficient energy saving, by preventing lowering of service by grasping situation of the usage of the passenger conveyor and the situation of energy saving amount.

In addition to the above, US 2001/0002644 A1 discloses a control apparatus for a passenger conveyor. The respective teaching considers a standby mode and a conveying mode, wherein a passenger detection in so-called first and second detection zones restart/start a first and second set time timer, respectively.

Yet further, DE 195 40 415 A1 discloses the determination of the number of passengers based on observing the consumed energy of a passenger conveyor in order to avoid problems associated with optical sensors.

### Disclosure of the Invention

The above-discussed problems are solved by the subject-matter of the independent claim. Further preferred embodiments are defined in the dependent claims.
1. The present invention relates to a control device for a passenger conveyor wherein a passenger conveyor which circulatively moves a plurality of steps that are arranged endlessly from one gate side to the other gate side, and is operated normally in an energy saving mode, in a conveying operation mode for the first predetermined time which is set at a time equal to or more than the time necessary to convey a passenger from one gate side to the other gate side when a passenger is detected at a gate side, in an energy saving operation mode switched from the conveying operation mode when no other passengers are detected before the first predetermined time elapses, and wherein the operation condition is measured by each operation mode.
   Thus, it is possible to judge whether or not the passenger conveyor is being operated suitably in the operation mode according to the measured result, and it is possible to accurately aim for energy saving.
2. Furthermore, the present invention relates to a control device for a passenger conveyor wherein the energy saving operation mode is either of a low speed operation mode, or a waiting mode in which the circulative movement of the steps are stopped, and the operation condition is measured.
   Also in this way, it is possible to judge whether or not the passenger conveyor is being operated suitably by switching the conveying operation mode to/from the low speed operation mode, or the conveying mode to/from the waiting mode according to the measured results, and it is possible to aim for energy saving accurately.
3. Moreover, the present invention relates to a control device for a passenger conveyor wherein the energy saving mode includes the low speed operation mode and the waiting mode, and along with the first predetermined time that controls the operation time in the conveying operation mode, also a second predetermined time that controls the operation time in the low speed operation mode is set; the passenger conveyor is normally operated in the energy saving mode, the mode is switched from the energy saving mode to the first predetermined-time conveying operation mode when a passengers is detected, the passenger conveyor is operated in the low speed operation mode for the second predetermined time when no passengers are detected before the first predetermined time elapses; the waiting mode is selected if no passengers are detected before the second predetermined time elapses, and the operation condition is also measured by each operation mode.
   Also in this way, as it is possible to judge whether or not the first and second predetermined times are accurately set from the measured result, i.e. to judge whether or not the operations in the low speed operation mode and waiting mode are accurate, it is possible to aim for energy saving accurately.
4. Furthermore, the present invention relates to a control device for a passenger conveyor wherein the energy saving mode includes the low speed operation mode, the waiting mode, and a warning operation mode which warns a passenger who is in the counter direction to the conveying direction by moving the steps in the conveying direction, and along with the first predetermined time that controls the operation time in the conveying operation mode, also a second predetermined time that controls the operation time in the low speed operation mode is set; the passenger conveyor is normally operated in the energy saving mode; the passenger conveyor is operated in the conveying operation mode for the first predetermined time by being switched from the energy saving mode when a passenger is detected; the passenger conveyor is operated in the low speed operation mode for the second predetermined time when no passengers are detected before the first predetermined time elapses; the waiting mode is selected if no passengers are detected before the second predetermined time elapses; the warning operation mode is selected if a passenger is detected in the counter direction to the conveying direction during stop in the waiting mode, and the operation condition is measured by each operation mode.
   Also in this way, as it is possible to judge whether or not the first and second predetermined times are accurately set from the measured results, i.e. to judge whether or not the operations in the low speed operation mode and waiting mode are accurate, and also to grasp the occurrence state of the warning mode, it is possible to aim for energy saving accurately, without lowering service.
5. Moreover, the present invention relates to a control device for a passenger conveyor wherein the energy saving mode includes the low speed operation mode that circulatively moves the steps at a speed lower than the rated speed, the waiting mode that stops the circulative movement of the steps, the warning operation mode that warns a passenger who is in the counter direction to the conveying direction by moving the steps in the conveying direction, and the measurement means is a per-mode operation time accumulating means that accumulates separately the times operated in the conveying mode and the energy saving modes.
   Also in this way, it is possible to judge whether or not the energy saving operation is functioning efficiently by grasping the operation condition of the passenger conveyor from the operation times in each of the modes.
6. Furthermore, the present invention relates to a control device for a passenger conveyor wherein the energy saving mode includes the low speed operation mode that circulatively moves the steps at a speed lower than the rated speed, the waiting mode that stops the circulative movement of the steps, and the warning operation mode that warns a passenger who is in the counter direction to the conveying direction by moving the steps in the conveying direction; and the measurement means is a per-mode operation switchover frequency measuring means that measures the number of times of operation switchovers of each of the conveying operation modes and the other operation modes.
   Thus, it is possible to grasp the operation condition of the passenger conveyor from the number of times of switchovers of each of the modes, and to judge whether or not the energy saving operation is functioning efficiently.
7. Moreover, the present invention relates to a control device for a passenger conveyor wherein the power consumption per unit of time for operating the passenger conveyor with no load in conveying operation mode is prerecorded, and along with integrating the measured value of the electric energy when the passenger conveyor is operated in energy saving operation, the operation time in energy saving operation mode is accumulated, and calculates as an energy saving amount a value obtained by subtracting the integrated electric energy in energy saving operation from the value obtained by multiplying the abovementioned operation time in energy saving operation by the energy consumption per unit of time when operated in conveying operation mode.
   Thus, it is possible to grasp accurately the energy saving amount because the electric energy in energy saving operation is the measured value.
8. Furthermore, the present invention relates to a control device for a passenger conveyor wherein along with the power consumption per unit of time for operating the passenger conveyor with no load in conveying operation mode the energy consumption per unit of time for operating the passenger conveyor in energy saving operation mode is prerecorded, the operation time when the passenger is operated in the energy saving operation mode is accumulated, and the energy saving amount is calculated by subtracting the value obtained by multiplying the above-mentioned accumulated time by the power consumption by unit of time when operated in the prerecorded energy saving operation node, from the value obtained by multiplying the accumulated time by the power consumption per unit of time when operated in the conveying operation mode.
   Accordingly, it is possible to calculate the energy saving amount without the necessity of providing an integrating wattmeter, thus making the control device simple.

### Brief Description of the Drawings

Figure 1 is a block diagram showing the whole configuration of the control device for a preferred control device for a passenger conveyor in accordance with the first embodiment of the present invention.
Figure 2 is similarly a block diagram showing an electric circuit.
Figure 3 is similarly a side view showing the range of detection of the passenger detecting device 33.
Figure 4 is similarly a plan view showing the range of detection of the passenger detecting device 33.
Figure 5 is similarly an explanatory diagram showing the motion of the passenger detecting device 33.
Figure 6 is similarly a plan view of the escalator 15 showing the manner of motion of the passenger detecting device 33.
Figure 7 is similarly an explanatory diagram showing the motion of the main parts related to the conveyance of a passenger 27.
Figure 8 is similarly a conceptual drawing showing the time series data memory 44 to which the operation state of the main parts is written.
Figure 9 is similarly a conceptual drawing of the unit time power consumption memory 45.
Figure 10 is similarly a conceptual drawing of the data analysis condition memory 46.
Figure 11 is similarly a conceptual drawing of the data analysis result memory 47.
Figure 12 is similarly an explanatory diagram showing a concept of the energy saving amount SWH.
Figure 13 is similarly an elevational view of the control panel 20.
Figure 14 is similarly a flowchart showing the motion of the escalator 15.
Figure 15 is similarly a flowchart showing the time series data collecting motion.
Figure 16 is similarly a flowchart showing the time series data analysis motion.
Figure 17 is similarly an explanatory diagram showing the relations of the motion between the passenger and the escalator.
Figure 18 is a flowchart showing the time series data analysis motion of the preferred control device for a passenger conveyor in accordance with the second embodiment of the present invention.
Figure 19 is a figure showing an example of the power consumption of a conventional escalator.
Figure 20 is an explanatory diagram showing a concept of the energy saving amount in an automatic conventional constant low-speed operation escalator.
Figure 21 is an explanatory diagram showing a concept of the energy saving amount in a conventional automatic normally-stopped operation escalator.

### Best Mode for Carrying out the Invention

To describe the present invention in more detail, the invention will be described below referring to the accompanying drawings. In the drawings, the same numerals are given to the same parts or the corresponding parts, and repeated explanation will be appropriately simplified or omitted.

### First Embodiment

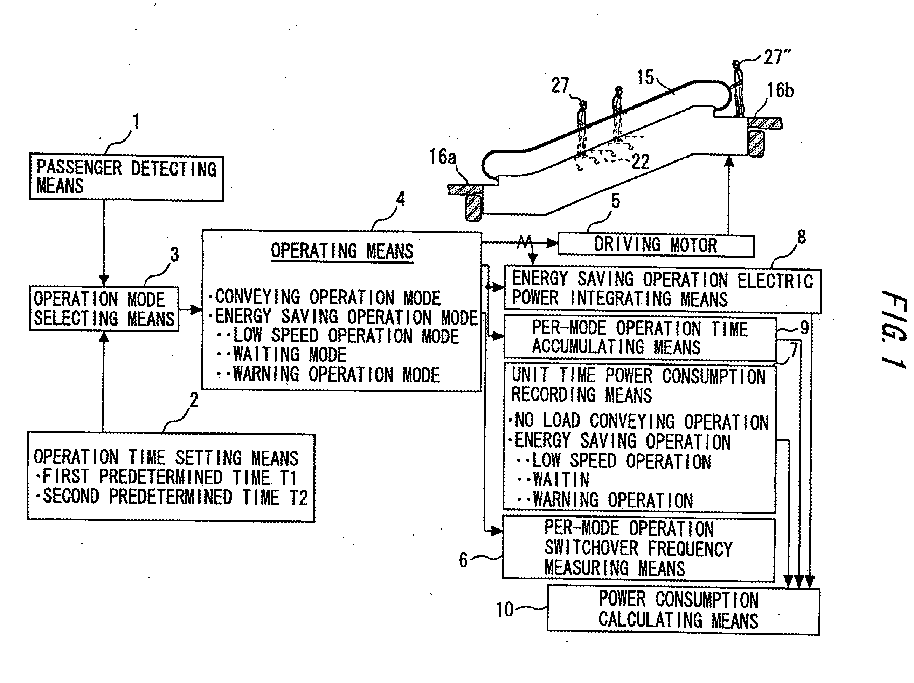

Figure 1 through Figure 17 show the first embodiment of a control device for a passenger conveyor in accordance with the first embodiment of the present invention.

The first embodiment relates to a control device for a passenger conveyor, and the passenger conveyor here is described as an escalator. The escalator is operated in a conveying operation mode which circulatively moves steps from one gate side to the other at a rated speed, and in an energy saving operation mode which circulatively moves the steps with less electric power than the aforementioned conveying operation mode, and especially, the energy saving operation mode includes a low speed operation mode, a waiting mode, and a warning operation mode in which a passenger at the counter direction to the conveying direction is warned by circulative movement of the steps in the conveying direction, and the operation condition is measured by each operation mode.

In Figure 1, numeral 1 denotes a passenger detecting means which detects a passenger at the gate sides 16a and 16b of the escalator 15. Numeral 2 denotes an operation time setting means by which the first predetermined time T1 that controls the operation time in the conveying operation mode is set to be equal to or longer than the time necessary for conveying a passenger 27 from one gate side 16a to the other gate side 16b by circulatively moving the steps 22 in the conveying operation mode, along with setting the second predetermined time T2 that controls the operation time in the low speed operation.

Numeral 3 denotes an operation mode selecting means by which an energy saving operation mode is normally selected; when the passenger detecting means 1 detects a passenger 27 the conveying operation mode is selected by being switched from the energy saving operation mode, in the case where the escalator 15 is operating in the conveying operation mode the conveying operation mode is selected newly for the first predetermined time T1, and in the case where no more passengers 27 are detected before the first predetermined time T1 elapses the low speed operation mode is selected for the second predetermined time T2 by being switched from the conveying operation mode as the first predetermined time T1 elapses; in the case where no more passengers are detected before the second predetermined time T2 elapses the waiting mode is selected by being switched from the low speed operation mode as the second predetermined time T2 elapses, and the warning operation mode is selected when a passenger 27" is detected at the counter direction to the conveying direction of the steps 22 during stop in the waiting mode.

Numeral 4 denotes an operating means for operating the escalator 15 in the operation mode selected by the operation mode selecting means 3. Numeral 5 denotes a driving motor which drives the escalator 15 in accordance with the operating means 4. Numeral 6 denotes a per-mode operation switchover frequency measuring means that measures the number of times of operation switchovers of each of the operation modes. Numeral 7 denotes a unit time power consumption recording means by which is recorded the power consumption per unit time when the escalator 15 with no load is operated in the conveying operation mode, and the power consumption when the escalator is operated in the energy saving modes, i.e. the low speed operation, waiting, and warning operation modes.

Numeral 8 denotes an energy saving operation electric power integrating means for integrating the electric energy during the period the escalator 15 is operated in energy saving operation. Numeral 9 denotes a per-mode operation time accumulating means for accumulating the times the escalator 15 is operated in each operation mode. Numeral 10 denotes a power consumption calculating means for calculating as the energy saving amount the value obtained by subtracting the electric energy integrated by the energy saving operation electric power integrating means from the value obtained by multiplying the accumulated time in each mode by the per-mode operation time accumulating means 9 by the power consumption in no load conveying operation recorded in the unit time power consumption recording means 7 together. The per-mode switchover frequency measuring means 6, the energy saving operation electric power integrating means 8, the per-mode operation time accumulating means 9 and the energy saving operation electric power consumption calculating means 10 comprise a measuring means which measures the operating conditions of each operation mode.

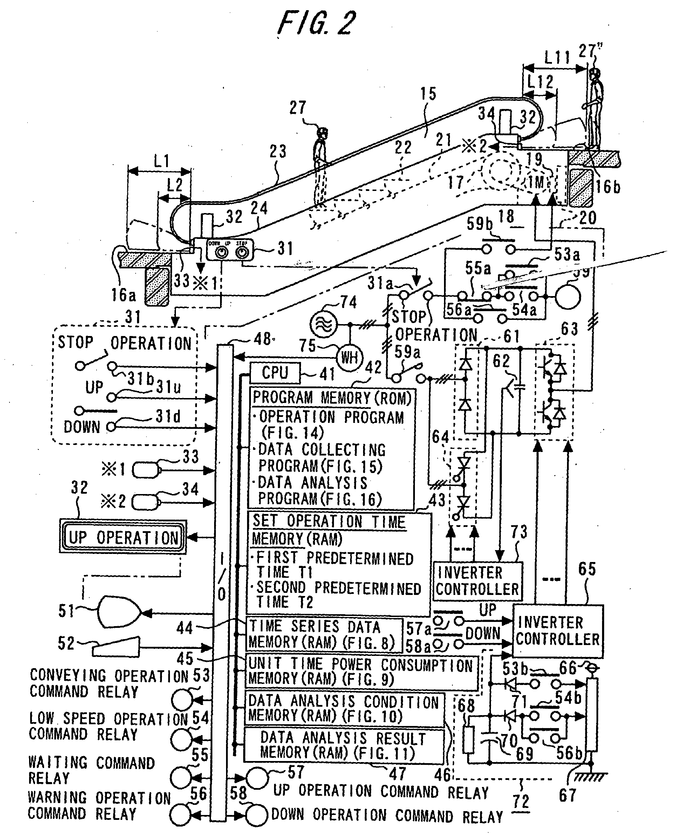

In Figure 2, numeral 15 denotes an escalator provided between one gate side 16a and the other gate side 16b, 17 denotes a hoisting machine, and 18 denotes a driving motor for driving the hoisting machine 17. In this example, an induction motor is used as a driving motor. Numeral 19 denotes a brake to control the hoisting machine 17, 20 denotes a control panel, 21 denotes a chain wound around the hoisting machine 17, 22 denotes steps that circulatively move by being fixed to the chain 21, 23 denotes a handrail, and 24 denotes a deck board.

Numeral 31 denotes an operating panel fixed to the exterior panel of the escalator, and comprises operation switches 31a and 31b, an UP-switch 31u and a DOWN-switch 31d. Numeral 32 denotes indicators provided on the gate sides 16a and 16b of the deck board 24, and indicates the operation direction and whether or not the escalator is in operation. Numeral 33 denotes a passenger detecting device provided in a lower part of the handrail inlet of one of the gate sides 16a, 34 denotes a passenger detecting device provided in a lower part of the handrail inlet of the other gate side 16b, and the passenger detecting devices 33 and 34 correspond to the passenger detecting means 1 in Figure 1.

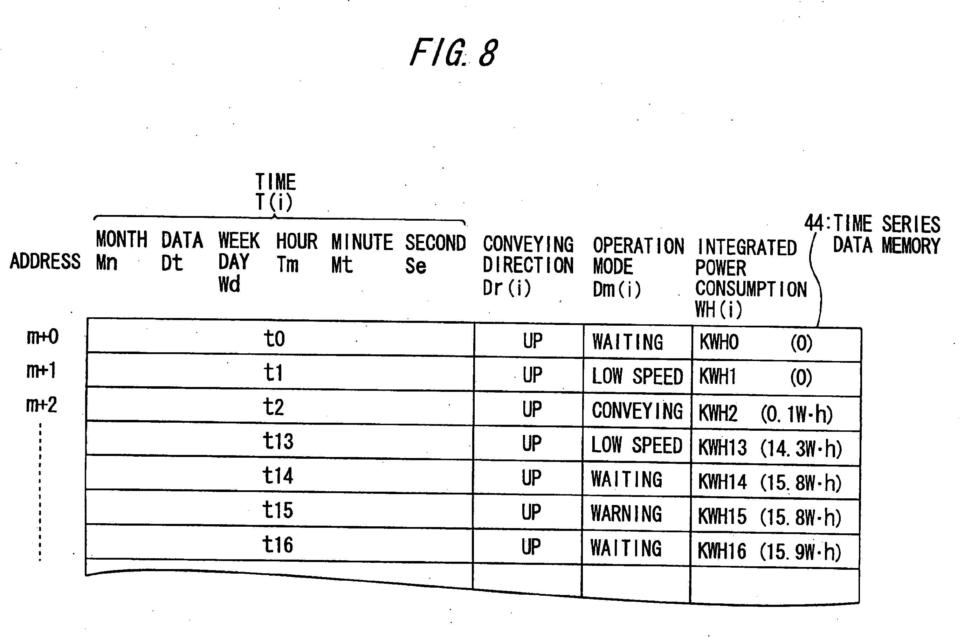

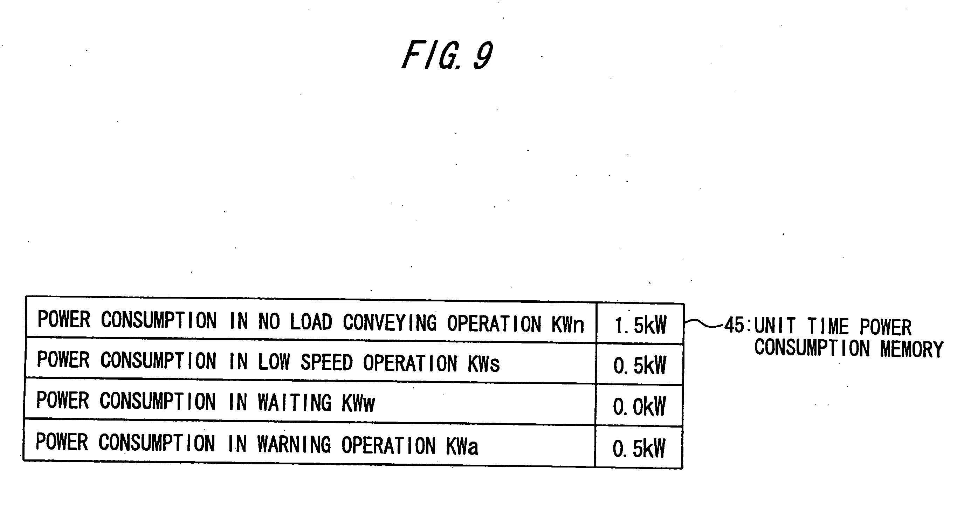

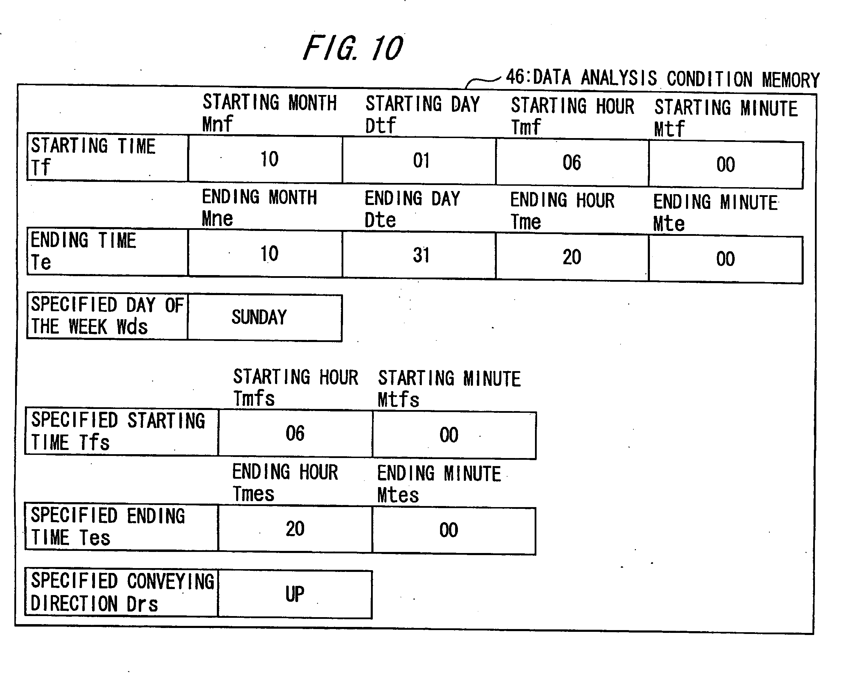

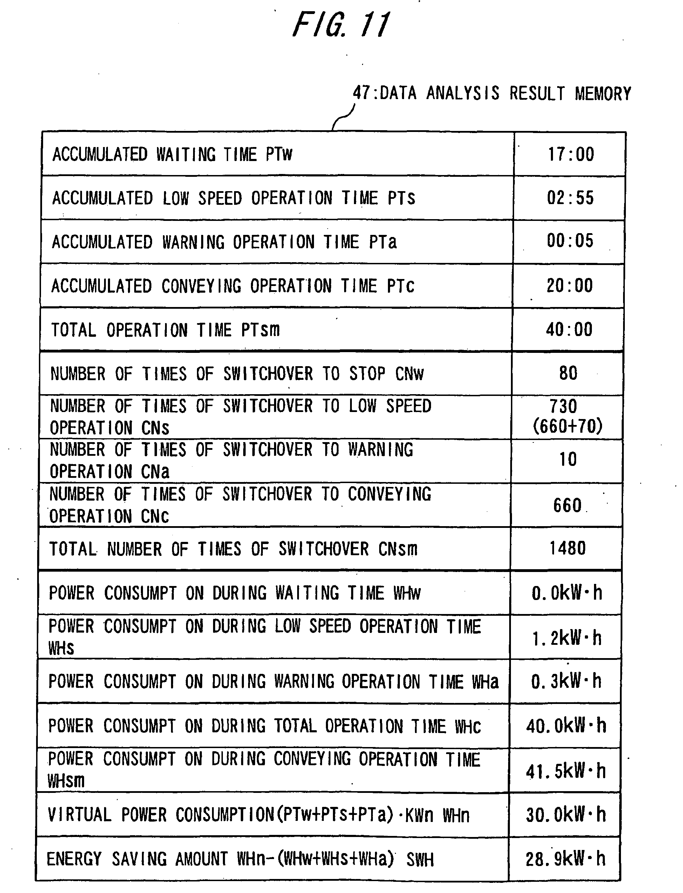

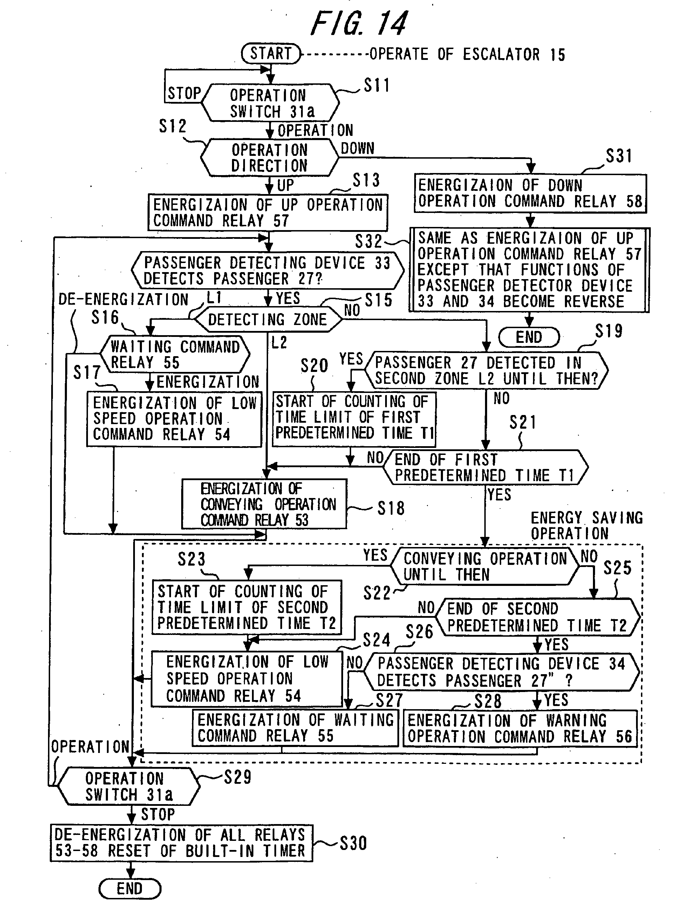

Numeral 41 denotes a CPU, 42 denotes a program memory in which are recorded the programs shown in Figure 14, Figure 15 and Figure 16, 43 denotes a set operation time memory in which is recorded set values of a first predetermined time T1 that controls the operation time in the conveying operation mode and of a second predetermined time T2 that controls the operation time in the low speed operation, numeral 44 denotes a time series data memory to which is written in chronological order the time T(i) every time the operation mode switches, the operation direction Dr(i), the operation mode Dm(i) and the integrated power consumption WH(i), described in detail in Figure 8. Numeral 45 denotes a unit time power consumption memory in which is recorded the power consumption per unit hour of each operation mode, and the details are shown in Figure 9. Numeral 46 denotes a data analysis condition memory in which are recorded conditions to analyze the data recorded in the time series data memory 44, of which the details are shown in Figure 10. Numeral 47 denotes a data analysis result memory in which are recorded the results from analyzing the time series data, described in detail in Figure 11. Numeral 48 denotes an I/O device.

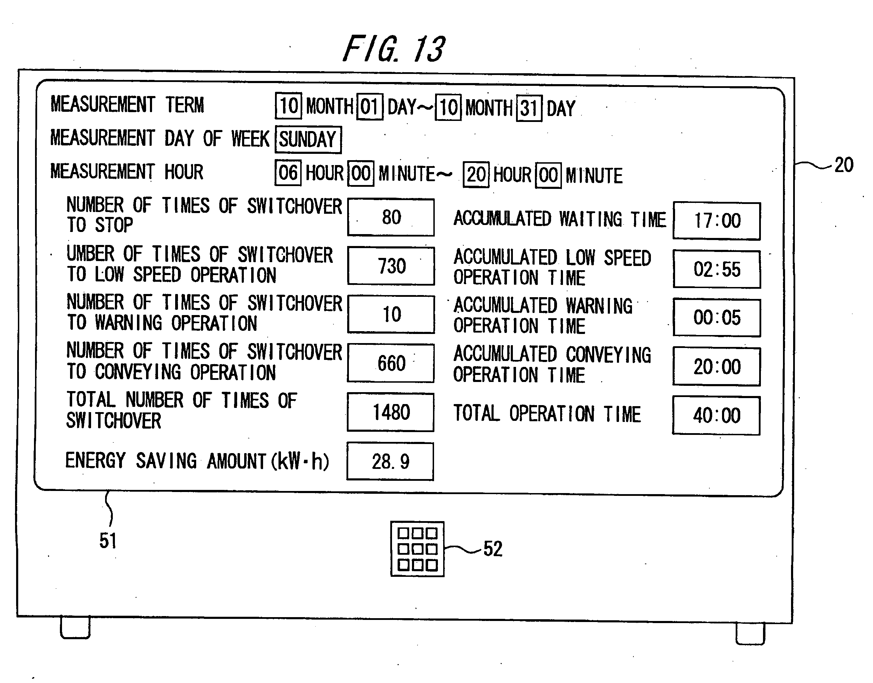

Numeral 51 denotes a display that is fixed to the control panel 20, of which the details are shown in figure 13. Numeral 52 denotes a numeric keypad that is used for writing data to the set operation time memory 43, the unit time power consumption memory 45 and the data analysis condition memory 46. Numeral 53 denotes a conveying operation command relay, and 53a and 53b denote normally open contacts thereof. Numeral 54 denotes a low speed operation command relay, and 54a and 54b denote normally open contacts thereof. Numeral 55 denotes a waiting command relay, and 55a denotes a normally closed contact thereof. Numeral 56 denotes a warning operation command relay, and 56a and 56b denote normally open contacts thereof. Numeral 57 denotes an UP operation command relay, and 57a denotes a normally open contact thereof. Numeral 58 denotes a DOWN operation command relay, and 58a denotes a normally open contact thereof. Numeral 59 denotes a contactor of a main circuit, 59a denotes a normally open main contact thereof, and 59b denotes a normally open auxiliary contact thereof.

Numeral 61 denotes a converter which switches three-phase alternating current to direct current, 62 denotes a smoothing capacitor which is connected to the direct current circuit, 63 denotes an inverter which energizes the driving motor 18 by converting direct current to three-phase current, and 64 denotes an electric power returning inverter for returning electric power to the power supply. Numeral 65 denotes an inverter controller for determining the phase sequence of the inverter 63 by closure of the normally open contacts 57a and 58a, and also generates three-phase current of variable voltage and variable frequency by controlling the inverter 63 in accordance with the operation pattern. Numeral 66 denotes a control power supply, 67 and 68 denote resistors, 69 denotes a capacitor, and 70 and 71 denote diodes, and comprise an operation pattern circuit 72. Numeral 73 denotes an inverter controller which controls the electric power returning inverter 64. Numeral 74 denotes a three-phase current power supply, and 75 denotes an integrating wattmeter which is connected to the power supply circuit.

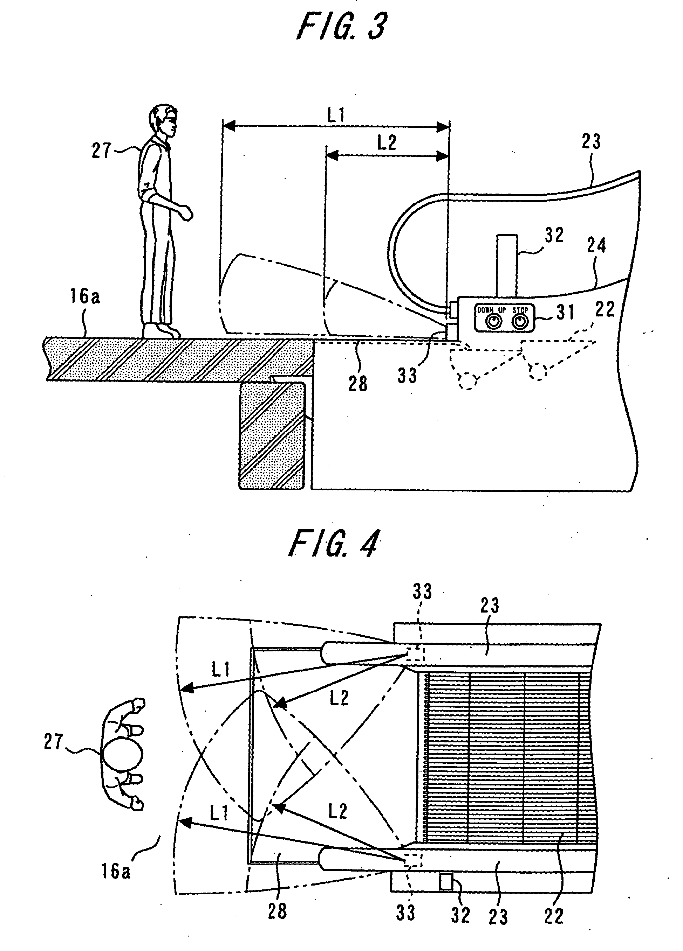

In Figure 3 and Figure 4, the passenger detecting device 33 is provided in a lower parts of the handrail inlets on the right and left sides. In order to avoid erroneous detection of general passersby and to detect a passenger immediately, the passenger detecting device 33 has a zone which is one to two meters ahead of the fixed position as a first zone L1 and another zone which is zero to one meter ahead of the fixed position as a second zone L2, and the passenger 27 is detected by distinguishing the two zones. The same applies to the passenger detecting device 34.

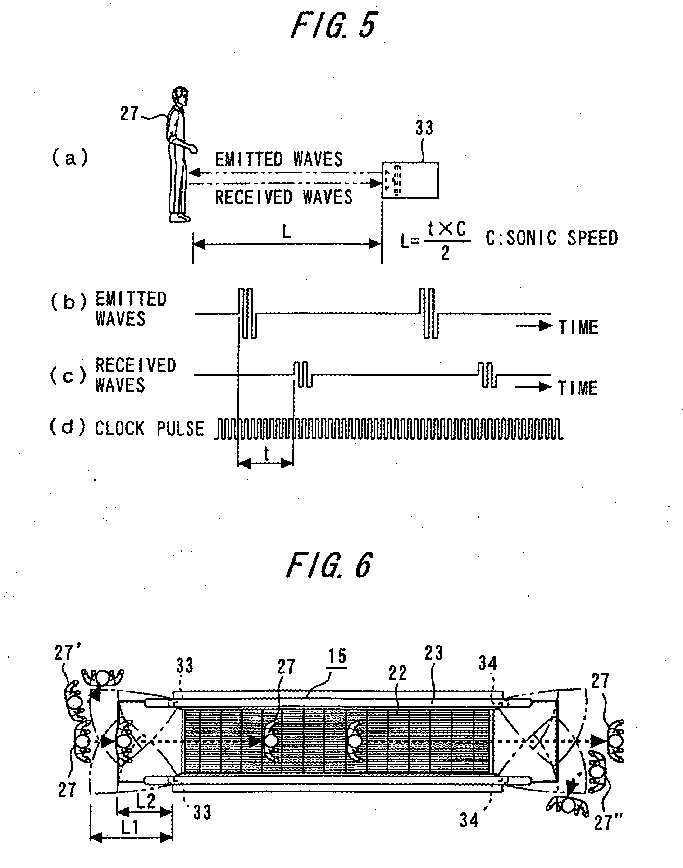

The motion of the passenger detecting device 33 will hereinafter be explained referring to Figure 5. As shown in Figure 5(a), supersonic waves are emitted from the passenger detecting device 33. The supersonic waves are emitted from a conical horn and gradually expand in a fan shape, as shown in Figure 3 and Figure 4. The reflection waves thereof are received again by the passenger detecting device 33, and the distance is read, as shown in Figure 5(b). The time difference t is read by the built-in clockpulse, as shown in Figure 5(c). That is, it is possible to obtain the distance L=(t x C)/2, C being sonic speed. The passenger detecting device 33 outputs a result after judging in which of the zones, i.e. the first zone L1 or the second zone L2, the resulted distance L is. The same applies to the passenger detecting device 34.

The motion of the escalator 15 will be explained hereinafter referring to Figures 2, 6 and 7.

Firstly, it is treated that at time to the operation switches 31a and 31b of the operating panel 31 and also the UP switch 31u are closed to operate the escalator 15. First the waiting command relay 55 is energized and the normally closed contact 55a is opened, and the escalator stops to be in the waiting mode. The indicator 32 indicates "In UP Operation".

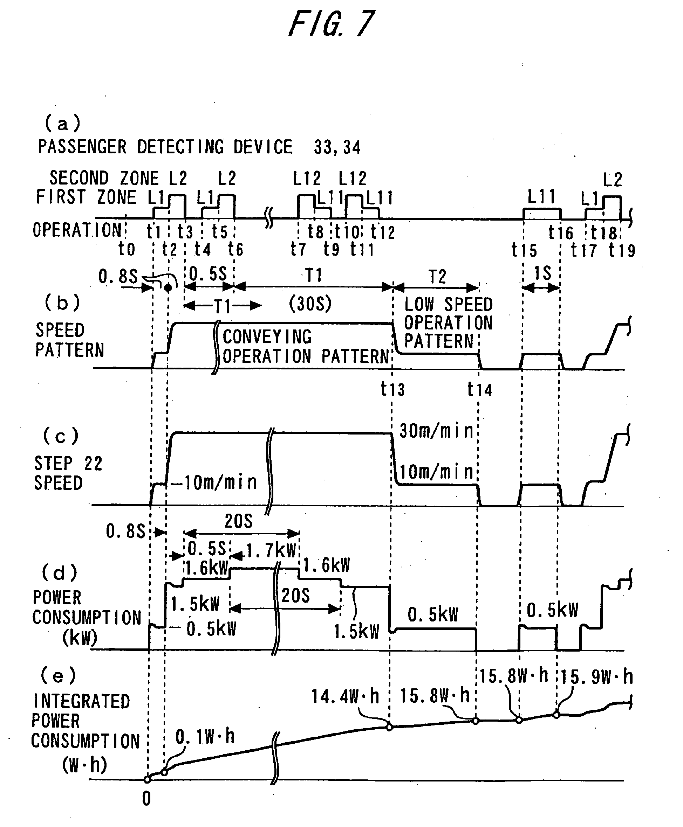

When the passenger 27 is detected in the first zone L1 at time t1, the low speed operation command relay 54 is energized and the contact 54a is closed, and the contactor 59 is energized. The main contact 59a thereof is closed and the converter 61 is connected to the three-phase current power supply 74, and the brake 19 is opened according to the closure of the normally open contact 59b. Also, the operation pattern circuit 72 outputs a speed pattern comprising of the charged voltage of the capacitor 69 according to the closure of the normally open contact 54b, as shown in Figure 7(b). The inverter control circuit 65 controls the inverter 63 with the UP direction as the phase sequence in accordance with the speed pattern. The driving motor 18 circulatively moves the steps 22 in the UP direction at a low speed of 10 meters per minute, controlled by the inverter 63. Assuming that the walking speed is 1.2 meters per minute, the passenger 27 approaches the second zone L2 about 0.8 seconds after time t1.

When a passenger 27 is detected in the second zone L2 at time t2, the conveying operation command relay 53 is energized and the contact 53a is closed, and the contactor 59 is continuously energized. Also, due to the closure of the normally open contact 53b, the operation pattern circuit 72 outputs a speed pattern as shown in Figure 7(b), and the driving motor 18 circulatively moves the steps 22 in the UP direction at a rated speed of 30 meters per minute.

When the passenger 27 moves forward further and goes out of the second zone L2 at time t3, a built-in timer counts the time limit of the first predetermined time T1. Here, assuming that the distance between one gate side 16a and the other gate side 16b is 10 meters, as the steps 22 travel the aforementioned distance in 20 seconds, the first predetermined time T1 becomes 30 seconds.

When a succeeding passenger 27 is detected in the first zone L1 at time t4, is detected in the second zone L2 at time t5 and goes out of the second zone L2 at time t6, the timer starts counting the time limit of the first predetermined time T1 again.

A passenger 27 arrives at the other gate side 16b and is detected in a second zone L12 at time t7 by the passenger detecting device 34, is detected at a first zone L11 at time t8, and goes out of the range of detection at time t9. Similarly, a proceeding passenger 27 is detected in the detecting zone L12 at time t10, is detected in the first detecting zone L11, and goes out of the range of detection at time t12. The escalator 15 is in conveying operation during the time from the aforementioned time t7 through t12, and the escalator 15 will not be affected in any way even if the passenger detecting device 34 functions.

When the first predetermined time T1 from time t6 elapses at t13, the relay is switched to the low speed command relay 54. Thus, the normally open contact 53b opens, and the normally open contact 54b closes, so the operation pattern circuit 72 outputs a low speed operation pattern. The driving motor 18 circulatively moves the steps 22 in the UP direction at a low speed of 10 meters per minute according to the low speed operation pattern.

Also, the timer starts counting the time limit of the second predetermined time T2 at time t13. If no passengers 27 are detected during this time limit and the second predetermined period T2 elapses at time t14, the relay is switched from the low speed operation relay 54 to the waiting command relay 55, the escalator 15 stops by de-energizing of the contactor 59 by opening of the normally closed contact 55a, and the escalator 15 is brought to a waiting state by function of the brake 19.

When a passenger 27" is detected in the first detecting zone L11 of the other gate side 16b during stop at time t15, the warning operation command relay 56 is energized and the normally open contacts 56a and 56b close. According to these closures, the contactor 59 is energized, and also a low speed operation pattern is outputted and the steps 22 circulatively move in the UP direction at a low speed.

When the passenger 27" goes out of the first zone L11 at time t16, the escalator 15 returns to a waiting state.

When another passenger 27 is detected in the first zone L1 at time t17, detected in the second zone L2 at time t18 and goes out of the second zone L2 at time t19, the escalator 15 operates at the respective times as aforementioned.

In Figure 6, in the case when a passenger 27' is detected by the passenger detecting device 33 in the first zone L1 but goes out of the range of detection before reaching the second zone L2, the escalator 15 on standby is once operated at a low speed according to the detection in the first zone L1, however, it returns to the waiting state immediately after the passenger 27' goes out of the range of detection.

The power consumption of the escalator 15 is calculated according to Figure 19, and is shown in Figure 7(d). Also, the integrated power consumption thereof is shown in Figure 7(e).

Figure 8 shows the data construction of the time series data memory 44, to which is written to the address (m+i) starting from the address (m+0) the operation mode Dm(i) switched in chronological order the time of switchover t(i), the operation direction Dr(i), the types of command relays 53 through 56, and the integrated power consumption WH(i) read from the integrating wattmeter. Here, the time t(i) comprises of a month Mn(i), a day Dt(i), a day of the week Wd(i), an hour Tm(i), a minute Mt(i) and a second Se(i). The time series data in the figure is created in accordance with Figure 7.

Figure 9 shows the contents of the unit time power consumption memory 45, which is the power consumption per unit of time when an escalator 15 with no passengers is operated in each of the modes, and is made in accordance with Figure 19.

Figure 10 shows the contents of the data analysis condition memory 46, and identifies data to be analyzed from the data written in the time series data memory 44 shown in Figure 8. That is, the starting time Tf and the ending time Te that specify the period the data was written are specified. The starting time Tf comprises of a starting month Mnf, a starting day Dtf, a starting hour Tmf and a starting minute Mnf. Similarly, the ending time Te comprises of an ending month Mne, an ending day Dte, an ending hour Tme and an ending minute Mte. In the above-mentioned period, the specified day of the week Wds, the specified starting time Tfs and the specified ending time Tes which carry out the analysis in the specified day of the week Wds, which is the object of analysis, and the specified operation direction Drs are specified. The specified starting time Tfs comprises of a starting hour Tmfs and a starting minute Mtfs. The specified ending time Tes similarly comprises an ending hour Tmes and an ending minute Mtes.

Accordingly, data analysis is performed of the data from the specified starting time Tfs to the specified ending time Tes of the specified day of week Wds in the period from the aforementioned starting time Tf to the ending time Te, out of the data recorded in the time series data memory 44, and also of the data of the specified operation direction.

Figure 11 shows the contents of the data analysis result memory 47. Analysis of the operation time is based on the total waiting time PTw, the total low speed operation time PTs, the total warning operation time PTa, the total conveying operation time PTc, and the total operation time PTsm which is the sum of all the aforementioned operation times.

Analysis of the number of times of operation switchovers is based on the number of times CNw switched to stop, the number of times CNs switched to low speed operation, the number of times CNa switched to warning operation, the number of times CNc switched to conveying operation, and the total number of times of switchovers CNsm which is the sum of all the aforementioned numbers of times of switchovers.

Analysis of the amount of power consumption is based on the amount of power consumption WHw during the total waiting time PTw, the amount of power consumption WHs during the total low speed operation time PTs, the amount of power consumption WHa during the total warning operation time PTa, the amount of power consumption WHc during the total conveying operation time PTc, and the amount of power consumption WHsm during the total operation time PTsm. Also, the virtual power consumption WHn assuming that the escalator 15 is operated at the rated speed for the low speed operation time which comprises of the total waiting time PTw, the total low speed operation time PTs and the total warning operation time PTa can be calculated by multiplying the sum of aforementioned total times (PTw+PTs+PTa) by the electric power KWn in no-load conveying operation shown in Figure 9. Furthermore, the energy saving amount SWH is calculated by subtracting the sum of the energy consumptions in energy saving operation (WHw+WHs+WHa) from the virtual power consumption WHn.

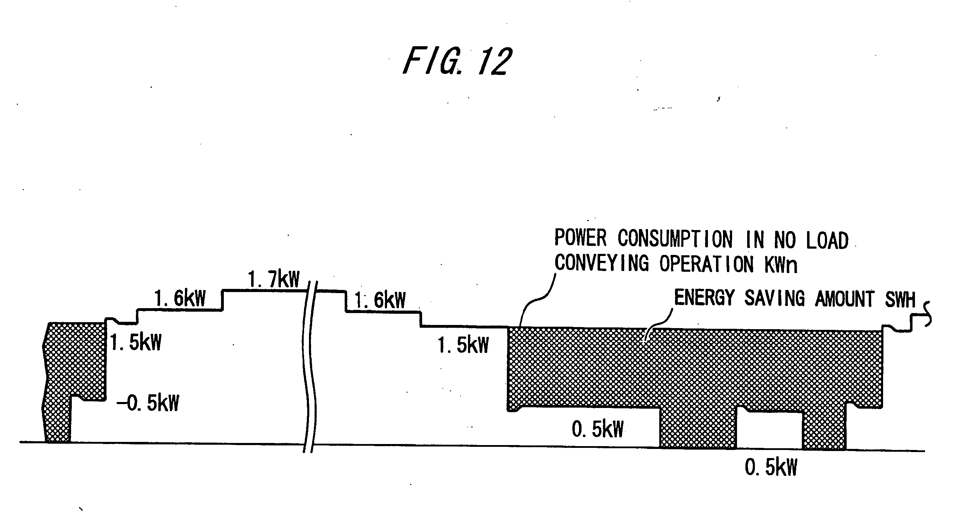

Figure 12 shows the energy saving amount SWH when the escalator 15 is operated as shown in Figure 7.

Figure 13 is an elevational view of the control panel 20, and the result from data analysis is shown on the display 51 built in the control panel 20.

The motion will be explained according to Figure 14

. When the operation switches 31a and 31b close in step S11 and the UP switch 31u closes in step 12, the UP operation command relay 57 is energized in step S13. As the passenger detecting devices 33 and 34 have not detected the passengers 27 and/or 27" at the beginning, the waiting command relay 55 is energized and the escalator 15 is brought to a waiting state.

### 1. In the case of conveying operation

When the passenger detecting device 33 detects the passenger 27, the procedure moves from step S14 to step S15. In the case where a passenger 27 is in the first zone L1, the procedure moves to step S16. In the case where the waiting command relay 55 is energized, the procedure moves to step S 17, and is energized by being switched to the low speed operation command relay 54 and operates at a low speed to prepare for boarding of the passenger 27. Low speed operation is maintained while the passenger 27 is detected in the first zone L1. In the case where the waiting command relay 55 is not energized in step S16, one of the command relays 53, 54 or 56 which is actually energized is continuously energized.

When the passenger detecting device 33 detects the passenger in the second zone L2 in the next processing cycle, the procedure moves from step S15 to step S18, and the conveying operation command relay 53 is energized and operates the steps 22 at the rated speed. As long as the passenger 27 is detected in the second zone L2, the conveying operation command relay is continuously energized. Even if a succeeding passenger 27 is detected in the first zone L1 during conveying operation, the procedure will be that of step S15, step S16 and step S29, so it will not be switched to the low speed command relay 54. Also, even if passengers 27 are detected in both the first zone L1 and the second zone L2 at the same time, the operation command relay 53 is continuously energized, so it will not be switched to the low speed operation command relay 54.

When the continuity of passengers 27 is broken and the passenger detecting device 33 does not detect any more passengers, the procedure moves from step S14 to step S19. Here, in the case where a passenger 27 has been detected in the second zone L2 during the processing cycle immediately before, i.e. the passenger has been detected to have finished passing the second zone L2 for the first time, the procedure moves to step S20, and the built-in timer starts counting the time limit of the first predetermined time T1 and moves to step S18.

When it is detected that a passenger 27 is newly detected to have finished passing the second zone L2 during conveying operation, the time limit of the first predetermined time T1 is newly counted in step S19 and step S20.

### 2. Switching from conveying operation to low speed operation

When the first predetermined time T1 elapses without new detection of a passenger 27 during conveying operation, the procedure moves to step S23 via step S14, step S19, step S21 and step S22. Here, counting of the second predetermined time T2 is started, and the low speed operation command relay 54 is energized in step S24. If a passenger 27 is not detected continuously, the escalator 15 is operated at low speed operation until the second predetermined time T2 elapses.

If the passenger detecting device 33 newly detects a passenger 27 in the second zone L2 during low speed operation, the conveying operation command relay 53 is energized by step S15 and step S18.

### 3. Switching from low speed operation to waiting

When the second predetermined time T2 elapses without detection of a passenger 27 during low speed operation, the procedure moves from step S25 to step S26. In the case where the passenger detecting device 34 does not detect a passenger 27" in the direction opposite to the conveying direction, the waiting command relay 55 is energized, the steps 22 stop, and the escalator is brought to a waiting state.

If the passenger detecting device 33 newly detects a passenger 27 during waiting, after the low speed operation command relay 54 is energized in step S17, the conveying operation command relay 53 is energized in step S18 when the passenger 27 is detected in the second zone L2.

### 4. Switching from waiting to warning operation

When the passenger detecting device 34 detects a passenger 27" at the other gate side 16b during waiting, the procedure moves from step S26 to step S28, and the warning operation command relay 56 is energized. If the passenger 27" goes out of the range of detection, it moves from step S26 to step S27, the waiting command relay 55 is energized and the escalator 15 returns immediately to a waiting state.

When the operation switches 31a and 31b are opened, it moves from step S29 to step S30, all the relays 53 through 56 are de-energized and also the built-in timer to count the first predetermined time T1 and the second predetermined time T2 are reset.

In the case where the DOWN switch 31d is closed in step S12, the DOWN operation command relay 58 is energized in step S31, and moves to step S32. Hereinafter, it is the same as when the UP operation switch 31u is closed, besides that the functions of the passenger detecting devices 33 and 34 become reverse. That is, the passenger detecting device 34 detects passengers in the conveying direction and operates the escalator 15 in the conveying operation, and the passenger detecting device 33 detects a passenger in the direction opposite to the conveying direction and operates the escalator 15 in the warning operation.

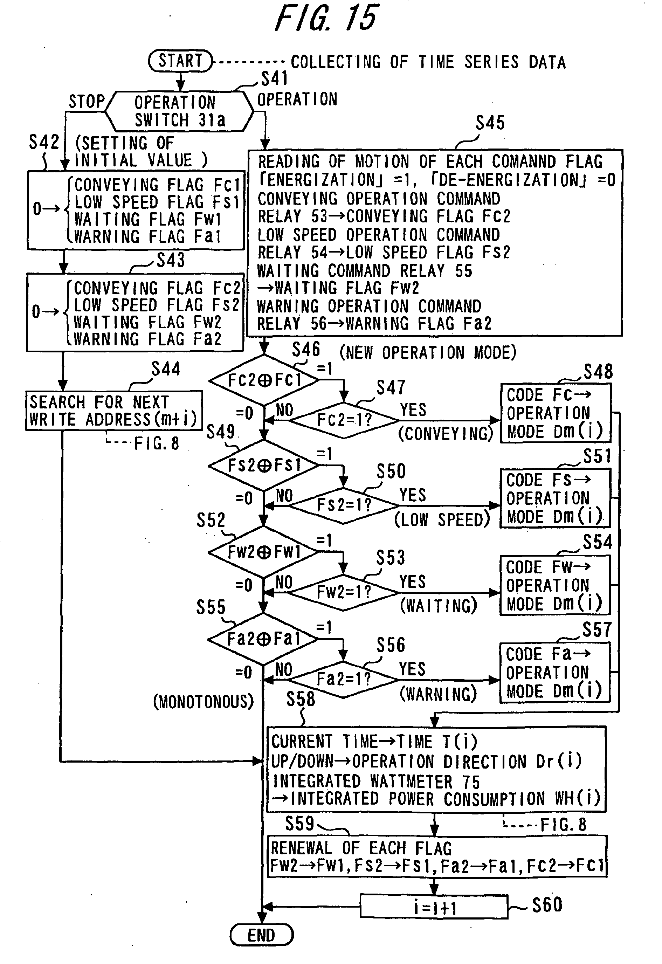

Collecting motion of the time series data will be explained in accordance with Figure 15. This motion is carried out by timer interrupt which occurs at a predetermined interval.

In the case where the operation switches 31a and 31b are opened in step S41, the procedure moves to step S42, and a conveying flag Fc1, a low speed flag Fs1, a waiting flag Fw1 and a warning flag Fa1 are all set to zero. In step S43, a conveying flag Fc2, a low speed flag Fs2, a waiting flag Fw2 and a warning flag Fa2 are all set to zero. In step S44, the next write address (m+i) is searched in the time series data memory 44.

In step S41, in the case where the operation switches 31a and 31b are closed, the procedure moves to step S45, reads the operation state of each of the relays 53 through 56, and writes in each of the corresponding flags Fc2, Fs2, Fw2 and Fa2 a one if a relay is energized, and a zero if a relay is de-energized.

In step S46, the exclusive OR of the conveying flags Fc2 and Fc1 is summed. If the result thereof is one, the procedure moves to step S47, and if the conveying flag Fc2 is one, a code Fc is written in the operation mode Dm(i) in the address (m+i) of the time series data memory 44. That is, a code Fc is written only when the conveying operation command relay 53 is newly energized. When the exclusive OR of the conveying flags Fc2 and Fc1 is zero in step S46, or when the conveying flag Fc2 is zero in step S47, the procedure moves to step S49. That is, the code Fc is not written in the operation mode Dm(i) when the conveying operation command relay 53 has not changed, or when the conveying operation command relay 53 is de-energized although having changed.

In step S49, the exclusive OR of the low speed flags Fs2 and Fs1 is summed. If the result thereof is one, the procedure moves to step S50, and if the low speed flag Fc1 is one, a code Fs is written in the operation mode Dm(i) in the address (m+i) of the time series data memory 44 in step 51. That is, a code Fs is written only when the low speed operation command relay 54 is newly energized. When the exclusive OR of the low speed flags Fs2 and Fs1 is zero in step S49, or when the low speed flag Fs2 is zero in step S50, the procedure moves to step S52. That is, the code Fs is not written in the operation mode Dm(i) when the low speed operation command relay 54 has not changed, or when the low speed operation command relay 54 is de-energized although having changed.

In step S52, the exclusive OR of the waiting flags Fw2 and Fw1 is summed. If the result thereof is one, the procedure moves to step S53, and if the waiting flag Fw2 is one, a code Fw is written in the operation mode Dm(i) in the address (m+i) of the time series data memory 44. That is, a code Fw is written only when the waiting command relay 55 is newly energized. When the exclusive OR of the waiting flags Fw2 and Fw1 is zero in step S52, or when the waiting flag Fw2 is zero in step S53, the procedure moves to step S55. That is, the code Fw is not written in the operation mode Dm(i) when the waiting command relay 55 has not changed, or when the waiting command relay 55 is de-energized although having changed.

In step S55, the exclusive OR of the warning flags Fa2 and Fa1 is summed. If the result thereof is one, the procedure moves to step S56, and if the warning flag Fa2 is one, a code Fa is written in the operation mode Dm(i) in the address (m+i) of the time series data memory 44. That is, a code Fa is written only when the warning operation command relay 56 is newly energized. When the exclusive OR of the warning flags Fa2 and Fa1 is zero in step S55, or when the warning flag Fa2 is zero in step S56, the step finishes. That is, the code Fa is not written in the operation mode Dm(i) when the warning operation command relay 56 has not changed, or when the warning operation command relay 56 is de-energized although having changed.

When a code Fc, Fs Fw or Fa is written in the operation mode Dm(i) in step S48, S51, S54 or S57, in step S58, in the address (m+i) of the time series data memory 44, the current time is written in the time T(i), either UP or DOWN is written in the operation direction Dr(i), and the measured value of the integrating wattmeter 75 is written in the integrated power consumption WH(i). In step S59, the contents of the flags Fc2, Fs2, Fw2 and Fa2 are copied to the flags Fc1, Fs1, Fw1 and Fa1, and the write address is moved to the next, and the procedure is finished.

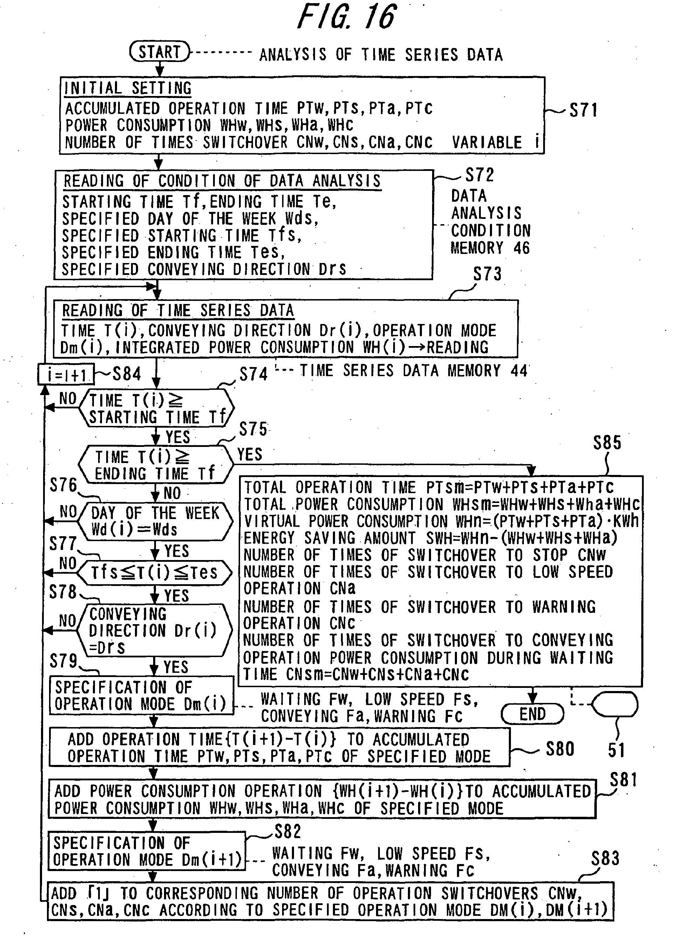

The analysis procedure of the time series data is explained in accordance with Figure 16. This procedure is to process the data recorded in the time series data memory 44, and is carried out in the CPU 41 during downtime of the escalator 15, after the ending time Te shown in Figure 10.

In step S71, each of the total operation times PTw, PTs, PTa and PTc, each of the number of times of switchover CNw, CNs, CNc and CNa, each of the amounts of power consumption WHw, WHs, WHa and WHc, and the variable i are set at zero.

In step S72, in order to specify the data which is the object of analysis, the starting time Tf, the ending time Te, the specified day of week Wds, the specified starting time Tfs, the specified ending time Tes and the specified operation direction Drs of analysis are read from the data analysis condition memory 46.

In step S73, the time series data is read from the time series data memory 44 in the order starting from address (m+0).

In step S74 through step S78, it is checked whether or not the read time series data conforms to the data analysis condition. If it does not conform, the procedure returns to step S73 and the time series data of the next address (m+i) is read.

That is, it is checked in step S74 whether or not the time T(i) of the time series data recorded in the address (m+i) has reached the starting time Tf. If it has, the procedure moves to step S75, and it is checked whether or not the time T(i) of the time series data has reached the ending time Te of the data analysis condition. In the case where the time T(i) is between the starting time Tf and the ending time Te, it is checked in step S76 whether or not the day of the week Wd(i) of the time series data matches to the specified day of week Wds. If it does match, the procedure moves to step S77, and it is checked whether or not the hour Tm(i) and the minute Mt(i) included in the time T(i) are between the specified starting time Tfs and the specified ending time Tes. If they are between the specified starting time Tfs and the specified ending time Tes, the procedure moves to step S78, and it is checked whether or not the operation direction Dr(i) of the time series data conforms to the specified operation direction Drs.

In the case where the time series data matches to the data analysis condition, data analysis is carried out in step S79 through step S83.

First, in step S79, it is identified which of the waiting Fw, the low speed Fs, the warning Fa or the conveying Fc modes the operation mode of the time series data is. As the escalator 15 is assumed that it has traveled in the specific operation mode until the time T(i+1) of the next time series data, the operation time {T(i+1) - T(i)} is added to the total times PTw, PTs, PTa and PTc of the specified operation modes Fw, Fs, Fa and Fc in step S80. Similarly, in step S81, the value obtained by subtracting the integrated power consumption WH(i) at the time T(i) from the integrated power consumption WH(i+1) at the time T(i+1) is added to the amount of power consumption WHw, WHs, WHa and WHc of the specified operation modes Fw, Fs, Fa and Fc. In step S82, the operation mode Dm (i+1) of the next time series data is specified. In the case where the operation mode Dm(i) specified in step S79 and the operation mode Dm(i+1) specified in step S82 differ from each other, a one is added to the corresponding number of times CNw, CNs, CNc or CNa. In step S84, a one is added to the variable i, in step S73 the time series data recorded in the next address is read, and the procedure from step S74 through step S83 is repeated, and so on.

In the case where the time T(i) of the time series data reaches the ending time Te of the analysis condition in step S75 as data analysis proceeds, the procedure moves to step S85, and the total number of times of switchovers CNsm=(CNw+CNs+CNa+CNc) is calculated. The total operation time PTsm=(PTw+PTs+PTa+PTc) is calculated by summing up the total times of the operation times. The amount of power consumption WHsm (WHw+WHs+WHa+WHc) during the total operation time is calculated by totalizing the power consumptions. The virtual power consumption WHn assuming that the escalator 15 was operated at the rated speed during energy saving operation is calculated. That is, WHn=(PTw+PTs+PTa) • KWn. The energy saving amount SWH is calculated by subtracting the electric energy that was actually consumed during energy saving operation from the virtual power consumption WHn. That is to say, SWH=WHn-(WHw+WHs+WHa). The aforementioned calculated results along with each of the number of times of operation switchovers CNw, CNs, CNa, CNc and the total number of times of switchovers CNsm is shown on the display 51, and the procedure ends.

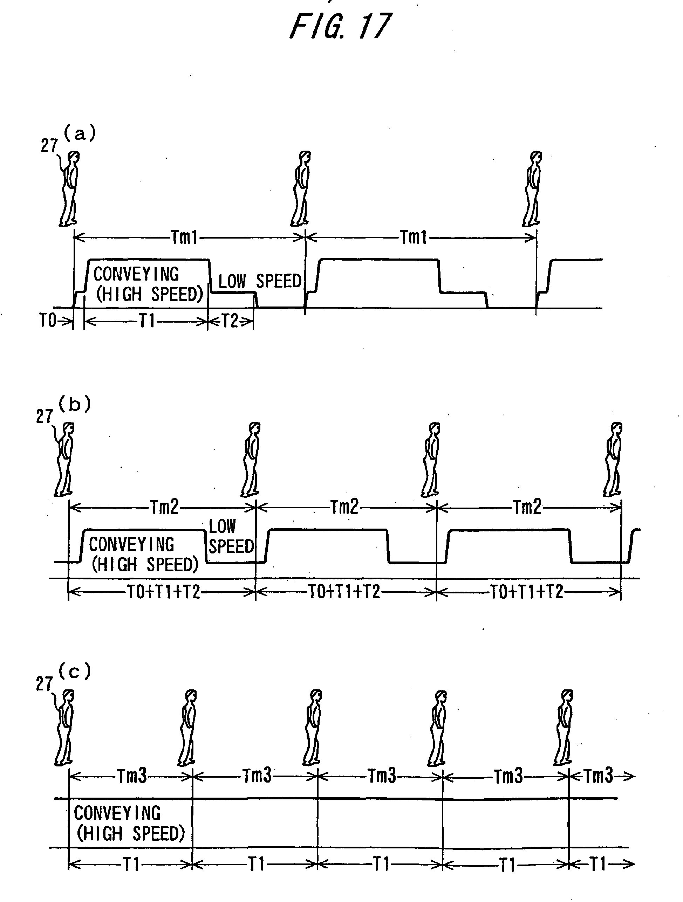

Hereinafter, the relation between the passenger 27 and the escalator 15 will be mentioned in accordance with Figure 17. The escalator 15 switches to a high speed after a time To after start, switches to a low speed operation after being operated at the high speed for the first predetermined time T1, and after being operated for the second predetermined time T2, it stops and is brought to a waiting state. This motion is treated as the basic motion, and (To+T1+T2) is treated as the basic motion time.

As already mentioned, the first predetermined time T1 is set to be a time longer than the minimum value Tr of the time necessary to convey a passenger 27 from one gate side 16a to the other gate side 16b.

As shown in Figure 17(a), assuming that a passenger 27 uses the escalator 15 each time at a time interval of Tm1 and that the time interval Tm1 is longer that the basic motion time (To+T1+T2), the escalator 15 repeats start and stop every time a passenger 27 appears. Accordingly, in the case of Figure 17(a), it is: the number of switchovers to low speed operation CNs=2 x the number of conveying operation switchovers CNw=2x the number of switchovers to stop CNw.

As shown in Figure 17(b), assuming that a passenger 27 uses the escalator 15 at a time interval of Tm2, and that the time interval Tm2 is shorter than the basic motion time (To+T1+T2) and longer than the first predetermined time T1, the escalator 15 repeats the low speed - high speed - low speed operation every time a passenger appears, and is never brought to a waiting state. Accordingly, in the case of Figure 17(b), it is: the number of switchovers to stop CNw=0, and, the number of switchovers to low speed operation CNs= the number of switchovers to conveying operation CNc.

As shown in Figure 17(c), assuming that a passenger 27 uses the escalator 15 at a time interval of Tm3 and that the time interval Tm3 is shorter than the first predetermined time T1, the escalator operates continuously at a high speed, and it is: the number of switchovers to stop CNw= number of switchovers to low speed operation CNs= number of switchovers to conveying operation CNc=0.

Thus, according to the analysis results of the time series data, in the case where the number of times of conveying operation CNc, the number of times of low speed operation CNs and the number of times of switchover to stop CNw are all small, it can be considered that the traffic is light and the number of times of operation itself is small, or inversely, that the traffic is heavy and the escalator 15 is almost always in operation. Here, taking also the energy saving amount SWH into consideration, it is proved that in the case where the energy saving amount SWH is large, the number of times of operation itself is small. Accordingly, in this case, it can be considered to shorten the first predetermined T1 and the second predetermined time T2 in order to aim for more energy saving. It is also proved that in the case where the energy saving amount SWH is small, the escalator 15 is almost always in operation. In this case, there is no way to aim for energy saving, so it can be considered to lengthen the first predetermined time T1 and the second predetermined time T2 attaching importance on service, and to operate the escalator 15 continuously in conveying operation.

Furthermore, in the case where the number of times of switchover to conveying operation CNc is almost the same as the number of times of switchover to stop CNw according to the analysis results, it can be considered that passengers 27 appear in ones and twos continuously in tens of seconds and that the escalator 15 is brought to a waiting state every time a passenger finishes using it. In this case, in places where importance is placed on service such as shopping centers or the like, it can be considered to lengthen the second predetermined time T2 and to operate the escalator 15 in low speed operation in the intervals between usages of the passengers 27. Thus, energy saving is generated mainly by low speed operation, and the degree thereof is low compared to the case where the escalator 15 is made to wait. In places where importance is attached more on energy saving than on service, it can be considered to shorten the first predetermined time T1 and the second predetermined time T2, and to lengthen the waiting time.

According to the first embodiment of the present invention mentioned hereinbefore, as: energy saving is aimed by making the escalator 15 to wait or to operate in a low speed; to switch to conveying operation when a passenger 27 is detected at a gate side 16a and is operated for the first predetermined time T1, and to operate at a low speed for the second predetermined time T2 with the lapse of the first predetermined time T1 if no passengers 27 are newly detected before the first predetermined time T1 elapses; and the number of times of each of the operations is counted, it is possible to accurately aim for energy saving by adjusting the first predetermined time T1 and the second predetermined time T2, or to operate the escalator 15 attaching importance on service, and furthermore, to confirm the results thereof by measurement. Thus, it is possible to operate the escalator 15 in a condition suitable for the installation location.

Moreover, as the escalator 15 is operated at a low speed during the second predetermined time T2 when there is a pause in the flow of passengers 27, it is possible to aim for energy saving compared to no load conveying operation at the rated speed, and also to avoid lowering of service as the passenger 27 can be aware of the conveying direction of the escalator 15 by the low speed operation thereof.

Furthermore, in the case where there is no usage of passengers 27 after the second predetermined time T2 elapses, the escalator 15 is stopped and brought to a waiting state, so large energy saving efficiency can be realized.

Moreover, in the case where a passenger 27" in the counter direction to the conveying direction is detected during waiting of the escalator 15, the escalator 15 is made to operate in a warning operation, so the energy saving operation will not obstruct smooth operation.

Furthermore, as the escalator 15 is operated at a low speed when a passenger 27 is detected in the first zone L1 which has a wide range as its range of detection, and then is operated at a high speed when the passenger 27 moves forward and enters the small second zone L2, it can be expected that erroneous detection of a passenger 27 would occur mostly in the first zone L1 and will not reach the second zone L2. Thus, it is possible to control waste of electric power.

Moreover, as measurements of the operation times PTw, PTs, PTa and PTc, the number of times of switchovers CNw, CNs, CNa, CNc, and the amounts of power consumption WHw, WHs, WHa and WHc are carried out separately for stop, low speed operation, warning operation and conveying operation, it is possible to analyze the operation situation with facility, and also accurately.

Furthermore, as the electric energy is measured by the integrating wattmeter 75, it is possible to obtain accurate data.

### Second Embodiment

In the first embodiment of the present invention, an integrating wattmeter 75 is used, however, in the second embodiment of the present invention, an integrating wattmeter 75 is not used, and instead, the power consumption in the energy saving operation is measured in advance and recorded in the unit time power consumption memory 45, and this recorded data is used. That is, the energy saving operation comprises a low speed operation, a waiting and a warning operation, and as they are all no load operations, it is possible to use a value measured in advance.

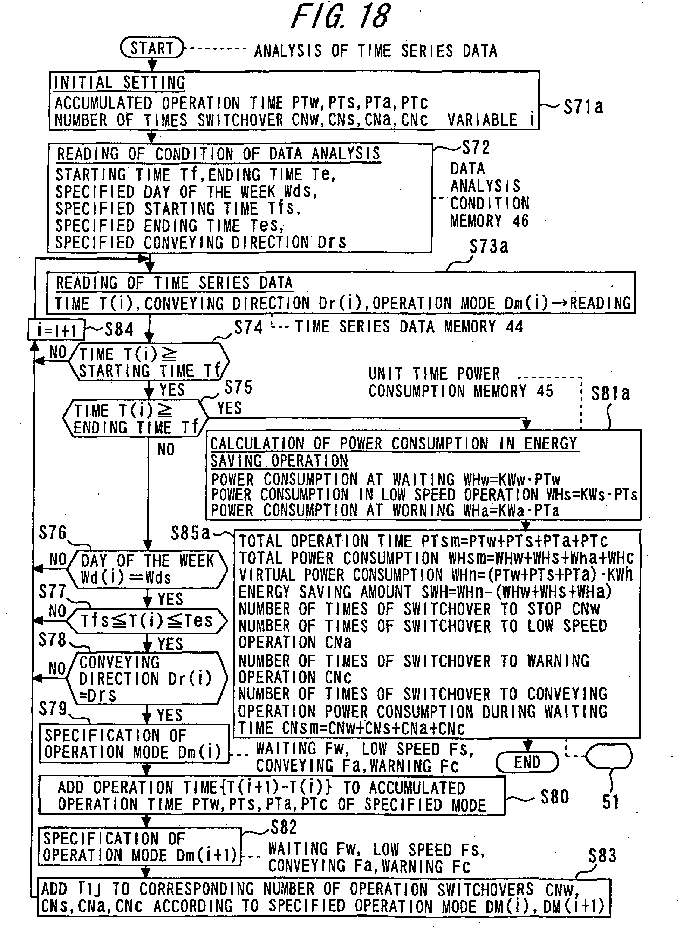

Also in this second embodiment of the present invention, explanation can be given by referring to Figure 1 through Figure 17, and also by adding Figure 18.

In Figure 1 through Figure 17, parts referring to the integrating wattmeter 75 will be omitted. Accordingly, the integrating wattmeter 75 in Figure 2 will be omitted. Also, in step S58 in Figure 15, the writing of the measured value of the integrating wattmeter 75 to the integrated power consumption WH(i) will be deleted. In Figure 9, the power consumptions in energy saving operation is already recorded, and these can be used for also in the second embodiment. Also, the time series data is analyzed by the procedure in Figure 18 instead of Figure 16.

In the procedure of Figure 18, steps which are given the same numerals as those given in Figure 16 denote the same steps.

The steps with an 'a' at the end of the numeral are steps in which the parts concerning electric power are omitted or modified in the corresponding steps in Figure 16.

That is, step S71a is the step S71 from which are omitted "the amounts of power consumption WHw, WHs, WHa, WHc". Step S73a is the step S73 from which is omitted "the integrated power consumption WH(i)". Step S81a is a procedure to calculate the amounts of power consumption WHw, WHs, WHa by multiplying the amounts of power consumption KWw, KWs and KWa read from the unit time power consumption memory 45 in Figure 9 by the accumulated times PTw, PTs, PTa and PTc respectively in step S80. Step S85a is the step S85 from which is deleted the total amount of power consumption WHsm. Figure 18 is equal to Figure 16 except for the above-mentioned parts, and explanation thereof will be omitted as it can be easily understood.

According to the aforementioned second embodiment of the present invention, it is possible to calculate the energy saving amount SWH without using the integrating wattmeter 75.

Other composing elements which substitute the composing elements disclosed in the aforementioned first and second embodiments will be described hereinafter as embodiments.

### Embodiment 1.

In the above-mentioned first and second embodiments, the analysis shown in Figure 16 and Figure 18 was performed by the CPU 41 during stop of the escalator 15, however, it is also possible to electrically transmit the data recorded in the time series data memory 44 to the computer center, and to perform the procedure shown in Figure 16 or Figure 18 off-line.

### Embodiment 2.

In the above-mentioned first and second embodiments, the detection signals of the passenger 27, 27" from the passenger detecting devices 33 and 34 are not recorded in the time series data memory 44, however, it is also possible to have the detection signals collected. This will allow more accurate setting of the first predetermined time T1 and the second predetermined time T2 according to the usages of passengers 27, thus making it possible to aim for efficient energy saving. Embodiment 3.

In the above-mentioned first and second embodiments, when starting the escalator 15, the escalator 15 is first operated in the low speed operation and then operated in the conveying operation, however, the escalator 15 can also be an automatic constant low-speed operation escalator as shown in Figure 20, or an automatic normally-stopped operation escalator as shown in Figure 21. By measuring the operation situation of the escalator, it is possible to set the first predetermined time T1 at a value suitable for the installation location.

### Embodiment 4.

In the above-mentioned first and second embodiments, the first predetermined time T1 and the second predetermined time T2 are fixed, however, it is possible to make the times change in accordance with the measured traffic condition. Thus, the escalator 15 can be operated according to the volume of traffic of the time, and energy saving can be aimed even more accurately.

### Embodiment 5.

In the above-mentioned first and second embodiments, an escalator is shown as an example of a passenger conveyor, however, it can also be a moving walk.

### Industrial Applicability

As aforementioned, the control device for a passenger conveyor in the present invention measures the energy saving amount of the time when there is a pause in traffic and the passenger conveyor becomes in a no-load condition. As pauses in traffic occur inevitably even in crowded passenger conveyors, it is useful for any passenger conveyor. To stretch a point, it is useful for passenger conveyors located in places where no-load operation occurs frequently.

## Claims

1. A control device for a passenger conveyor for operating a passenger conveyor (15) in a conveying operation mode which circulatively moves endlessly arranged steps (22) of said passenger conveyor (15) at a rated speed from one gate side (16a) to the other gate side (16b), and in an energy saving operation mode which circulatively moves said steps (22) with less electric power than in the conveying operation mode, comprising:
passenger detecting means (1) to detect passengers (27) at said gate sides (16a, 16b);
operation time setting means (2) for setting a first predetermined time (T1) to control the operation time in said conveying operation mode to be longer than an amount of time necessary for conveying said passenger in said conveying operation mode from said gate side (16a) to said other gate side (16b);
operation mode selecting means (3) which selects:
normally said energy saving operation mode;
said conveying operation mode for said first predetermined time (T1) by switching from said energy saving operation mode when said passenger detecting means (1) detects a passenger (27);
said conveying operation mode newly for said first predetermined time (T1) in the case where said passenger is detected during operation in said conveying operation mode; and
said energy saving operation mode by switching from said conveying operation mode at the time when said first predetermined time elapses in the case where no said passengers are newly detected before elapse of said first predetermined time (T1); and
operation means (4) for operating said passenger conveyor (15) in the mode selected by the operation mode selecting means (3),
**characterized in that**
the control device further comprises measuring means (6, 8, 9, 10) for measuring operation conditions of each of said operation modes separately, the measuring means comprising means (8) for integrating the electric power in energy saving operation, per-mode operation time accumulating means (9), means (6) for measuring the number of operation switchovers, and power consumption calculating means (10).

2. The control device for a passenger conveyor according to claim 1, wherein the energy saving operation mode comprises of either of:
a low speed operation mode which circulatively moves steps (22) from one gate side (16a) to the other gate side (16b) at a speed lower than the rated speed; or
a waiting mode which stops circulative movement of said steps (22).

3. The control device for a passenger conveyor according to claim 1, wherein:
the energy saving operation comprises of a low speed operation mode which circulatively moves steps (22) from one gate side (16a) to the other gate side (16b) at a speed lower than the rated speed, and a waiting mode which stops circulative movement of said steps (22);
the operation time setting means (2) sets a second predetermined time (T2) to control the operation time in said low speed operation in addition to setting the first predetermined time (T1) to control the operation time in the conveying operation mode;
the operation mode selecting means (3) selects:
normally the energy saving operation mode;
when the passenger detecting device (1) detects a passenger, said conveying mode by switching from said energy saving operation mode, and said conveying operation mode newly for said first predetermined time (T1) when in operation in said conveying operation mode;
said low speed operation mode for said second predetermined time (T2) by switching from said conveying operation mode at the time when said first predetermined time (T1) elapses in the case where no said passengers (27) are newly detected before elapse of said first predetermined time (T1); and
said waiting mode by switching from said low speed operation at the time when said second predetermined time (T2) elapses in the case where said passenger (27) is not newly detected before elapse of said second predetermined time (T2).

4. The control device for a passenger conveyor according to claim 1, wherein:
the energy saving operation mode comprises of:
a low speed operation mode which circulatively moves steps (22) at a speed lower than the rated speed;
a waiting mode which stops circulative movement of said steps (22); and
a warning operation mode which warns passenger(s) in the direction opposite to the conveying direction by circulatively moving said steps (22) in the conveying direction; and
the operation time setting means (2) sets the second predetermined time (T2) which controls the operation time of said low speed operation in addition to setting the first predetermined time (T1) which controls the time of the first predetermined time (T1);
the operation mode selecting means (3) selects:
normally the energy saving operation;
said conveying operation mode by switching from said energy saving mode in the case where the passenger detecting means (1) detects a passenger (27); and
said conveying operation mode newly for said first predetermined time (T1) in the case where the passenger detecting device (1) detects a passenger (27) during said conveying operation;
said low speed operation mode for said second predetermined time (T2) by switching from said conveying operation mode at the time when said first predetermined time (T1) elapses in the case where no said passengers (27) is are newly detected before elapse of said first predetermined time (T1);
said waiting mode by switching from said low speed operation mode at the time when said predetermined second time (T2) elapses in the case where no said passengers are newly detected before elapse of said second predetermined time (T2); and
the warning operation mode in the case where a passenger (27) in the direction opposite to the conveying direction of circulative movement of said steps (22) is detected during stop in said waiting mode.

5. The control device for a passenger conveyor according to claim 1, wherein:
the energy saving operation mode comprises of:
a low speed operation mode which circulatively moves steps (22) at a speed lower than the rated speed;
a waiting mode which stops circulative movement of said steps (22); and
a warning operation mode which warns passengers (27) in the direction opposite to the conveying direction by circulatively moving said steps (22) in the conveying direction; and
the measuring means is a per-mode operation time accumulating means (9) which accumulates separately the times operated in the conveying operation mode and each of said energy saving operation modes.

6. The control device for a passenger conveyor according to claim 1, wherein:
the energy saving operation mode comprises of:
a low speed operation mode which circulatively moves steps (22) at a speed lower than the rated speed;
a waiting mode which stops circulative movement of said steps (22); and
a warning operation mode which warns passengers (27) in the direction opposite to the conveying direction by circulatively moving said steps (22) in the conveying direction; and
the measuring means is a per-mode operation switchover frequency measuring means (6) which measures the number of times of operation switchovers of the conveying operation modes and each of said other operation modes.

7. The control device for a passenger conveyor according to claim 1, further comprising:
unit time power consumption recording means (7) in which is recorded a power consumption per unit time when said passenger conveyor (15) with no load is operated in the conveying operation mode;
wherein said energy saving operation electric power integrating means (8) integrate the electric energy during the period said passenger conveyor (15) is operated in said energy saving operation;
and wherein said power consumption calculating means (10) calculate an energy saving amount from a value obtained by subtracting an electric energy integrated by said energy saving operation electric power integrating means (8), from a value obtained by multiplying the accumulated time by said operation time accumulating means (9) by the power consumption recorded in said unit time power consumption recording means (7).

8. The control device for a passenger conveyor according to claim 1 further comprising:
unit time power consumption recording means (7) in which is recorded a power consumption per unit time when said passenger conveyor (15) with no load is operated in conveying operation mode along with a power consumption per unit time when in operation in said energy saving operation;
wherein said power consumption calculating means (10) calculate as the energy saving amount a value obtained by subtracting a value obtained by multiplying said energy saving operation power consumption by the accumulated time by said energy saving operation time accumulating means (9), by the value obtained by multiplying said no load conveying operation power consumption by the accumulated time by said energy saving operation time accumulating means (9).

## Patentansprüche

1. Steuereinrichtung für einen Passagierbeförderer zum Betreiben eines Passagierbeförderers (15) in einem Beförderungsbetriebsmodus, welcher endlos angeordnete Stufen (22) des Passagierbeförderers (15) bei einer Nenngeschwindigkeit von einer Torseite (16a) zu einer anderen Torseite (16b) umlaufend bewegt, und in einem Energiesparbetriebsmodus, welcher die Stufen (22) mit weniger elektrischer Leistung, als in dem. Beförderungsbetriebsmodus, umlaufend bewegt, umfassend:
Passagiererfassungsmittel (1) zum Erfassen von Passagieren (27) an den Torseiten (16a, 16b);
Betriebszeiteinstellmittel (2) zum Einstellen einer ersten vorbestimmten Zeit (T1) zum Steuern der Betriebszeit in dem Beförderungsbetriebsmodus, um länger zu sein als eine Zeitdauer, welche nötig ist zum Befördern des Passagiers in dem Beförderungsbetriebsmodus von der Torseite (16a) zu der anderen Torseite (16b);
Betriebsmodusauswahlmittel (3) welches auswählt:
normalerweise den Energiesparbetriebsmodus;
den Beförderungsbetriebsmodus für die erste vorbestimmte Zeit (T1), durch Umschalten von dem Energiesparbetriebsmodus, wenn das Passagiererfassungsmittel (1) einen Passagier (27) erfasst;
erneut den Beförderungsbetriebsmodus für die erste vorbestimmte Zeit (T1) in dem Fall, in welchem der Passagier während dem Betrieb in dem Beförderungsbetriebsmodus erfasst wird; und
den Energiesparbetriebsmodus, durch Umschalten von dem Beförderungsbetriebsmodus, zu der Zeit, wenn die erste vorbestimmte Zeit abläuft, in dem Fall, in welchem keine derartigen Passagiere vor dem Ablaufen der ersten vorbestimmten Zeit (T1) neu erfasst werden; und
Betriebsmittel (4) zum Betreiben des Passagierbeförderers (15) in dem Modus, der durch das Betriebsmodusauswahlmittel (3) ausgewählt wird,
**dadurch gekennzeichnet, dass**
die Steuereinrichtung ferner Messmittel (6, 8, 9, 10) zum separaten Messen von Betriebsbedingungen von jedem der Betriebsmodi umfasst, wobei das Messmittel Mittel (8) zum Integrieren der elektrischen Leistung in dem Energiesparbetrieb, Pro-Modus-Betriebszeit-Akkumulierungsmittel (9), Mittel (6) zum Messen der Zahl von Betriebswechseln und Leistungsverbrauchberechnungsmittel (10) umfasst.

2. Steuereinrichtung für einen Passagierbeförderer nach Anspruch 1, wobei der Energiesparbetriebsmodus eines umfasst von:
einem Betriebsmodus niedriger Geschwindigkeit, welcher Stufen (22) von einer Torseite (16a) zu der anderen Torseite (16b) bei einer niedrigeren Geschwindigkeit als die Nenngeschwindigkeit umlaufend bewegt; oder
einem Wartemodus, welcher umlaufende Bewegung der Stufen (22) stoppt.

3. Steuereinrichtung für einen Passagierbeförderer nach Anspruch 1, wobei:
der Energiesparbetriebsmodus aus einem Betriebsmodus niedriger Geschwindigkeit, welcher Stufen (22) von einer Torseiten (16a) zu der anderen Torseite (16b) bei einer niedrigeren Geschwindigkeit als die Nenngeschwindigkeit umlaufend bewegt, und einem Wartemodus, welcher umlaufende Bewegung der Stufen (22) stoppt, besteht;
das Betriebszeiteinstellmittel (2) eine zweite vorbestimmte Zeit (T2) einstellt, zum Steuern der Betriebszeit in dem Betrieb niedriger Geschwindigkeit, zusätzlich zum Einstellen der ersten vorbestimmten Geschwindigkeit (T1) zum Steuern der Betriebszeit in dem Beförderungsbetriebsmodus;
das Betriebsmodusauswahlmittel (3) auswählt:
normalerweise den Energiesparbetriebsmodus;
wenn die Passagiererfassungseinrichtung (1) einen Passagier erfasst, das Beförderungsmodus, durch Umschalten von dem Energiesparbetriebsmodus, und der Beförderungsbetriebsmodus erneut für die erste vorbestimmte Zeit (T1), wenn es sich im Betrieb in dem Beförderungsbetriebsmodus befindet;
den Betriebsmodus niedriger Geschwindigkeit für die zweite vorbestimmte Zeit (T2), durch Umschalten von dem Beförderungsbetriebsmodus zu der Zeit, wenn die erste vorbestimmte Zeit (T1) abläuft, in dem Fall, in welchem keine derartigen Passagiere (27) vor dem Ablauf der ersten vorbestimmten Zeit (T1) neu erfasst werden; und
den Wartemodus durch Umschalten von dem Betreib niedriger Geschwindigkeit zu der Zeit, wenn die zweite vorbestimmte Zeit (T2) abläuft, in dem Fall, in welchem der Passagier (27) nicht vor dem Ablauf der zweiten vorbestimmten Zeit (T2) neu erfasst wird.

4. Steuereinrichtung für einen Passagierbeförderer nach Anspruch 1, wobei:
der Energiesparbetriebsmodus besteht aus:
einem Betriebsmodus niedriger Geschwindigkeit, welcher Stufen (22) bei einer niedrigeren Geschwindigkeit als der Nenngeschwindigkeit umlaufend bewegt;
einen Wartemodus, welcher umlaufende Bewegung der Stufen (22) stoppt; und
einem Warnbetriebsmodus, welcher Passagiere bzw. einen Passagier in der Richtung entgegengesetzt zu der Beförderungsrichtung warnt durch umlaufendes Bewegen der Stufen (22) in der Bewegungsrichtung; und
das Betriebszeiteinstellmittel (2) die vorbestimmte Zeit (T2) einstellt, welche die Betriebszeit des Betriebs niedriger Geschwindigkeit steuert, zusätzlich zu dem Einstellen der ersten vorbestimmten Zeit (T1), welche die Zeit der ersten vorbestimmten Zeit (T1) steuert;
das Betriebsmodusauswahlmittel (3) auswählt:
normalerweise den Energiesparbetrieb;
den Beförderungsbetriebsmodus durch Umschalten von dem Energiesparmodus, in dem Fall, in welchem das Passagiererfassungsmittel (1) einen Passagier (27) erfasst; und
erneut den Beförderungsbetriebsmodus für die erste vorbestimmte Zeit (T1), in dem Fall, in welchem das Passagiererfassungsmittel (1) einen Passagier (27) während dem Beförderungsbetrieb erfasst;
den Betriebsmodus niedriger Geschwindigkeit für die zweite vorbestimmte Zeit (T2) durch Umschalten von dem Beförderungsbetriebsmodus zu der Zeit, wenn die erste vorbestimmte Zeit (T1) abläuft, in dem Fall, in welchem keine Passagiere (27) vor Ablauf der ersten vorbestimmten Zeit (T1) neu erfasst werden;
den Wartemodus, durch Umschalten von dem Betriebsmodus niedriger Geschwindigkeit zu der Zeit, wenn die vorbestimmte zweite Zeit (T2) abläuft, in dem Fall, in welchem keine Passagiere vor Ablauf der zweiten vorbestimmten Zeit (T2) neu erfasst werden; und
den Warnbetriebsmodus, in dem Fall, in welchem ein Passagier (27) in der Richtung entgegengesetzt zu der Beförderungsrichtung der umlaufenden Bewegung der Stufen (22) während dem Stopp in dem Wartemodus erfasst wird.

5. Steuereinrichtung für einen Passagierbeförderer nach Anspruch 1, wobei:
der Energiesparbetriebsmodus besteht aus:
einem Betriebsmodus niedriger Geschwindigkeit, welcher Stufen (22) bei einer niedrigeren Geschwindigkeit als der Nenngeschwindigkeit umlaufend bewegt;
einen Wartemodus, welcher umlaufende Bewegung der Stufen (22) stoppt; und
einem Warnbetriebsmodus, welcher Passagiere bzw. einen Passagier in der Richtung entgegengesetzt zu der Beförderungsrichtung warnt durch umlaufendes Bewegen der Stufen (22) in der Bewegungsrichtung; und
das Messmittel ein Pro-Modus-Betriebszeit-Akkumulierungsmittel (9) ist, welches separat die Zeiten des Betriebs in dem Beförderungsbetriebsmodus und jedem der Energiesparbetriebsmodi akkumuliert.

6. Steuereinrichtung für einen Passagierbeförderer nach Anspruch 1, wobei:
der Energiesparbetriebsmodus besteht aus:
einem Betriebsmodus niedriger Geschwindigkeit, welcher Stufen (22) bei einer niedrigeren Geschwindigkeit als der Nenngeschwindigkeit umlaufend bewegt;
einen Wartemodus, welcher umlaufende Bewegung der Stufen (22) stoppt; und
einem Warnbetriebsmodus, welcher Passagiere bzw. einen Passagier in der Richtung entgegengesetzt zu der Beförderungsrichtung warnt durch umlaufendes Bewegen der Stufen (22) in der Bewegungsrichtung; und
das Messmittel ein Pro-Modus-Betriebswechselfrequenz-Messmittel (6) ist, welches die Zahl von Malen des Betriebswechsels der Beförderungsbetriebsmodi und jedem der anderen Betriebsmodi misst.

7. Steuereinrichtung für einen Passagierbeförderer nach Anspruch 1, ferner umfassend:
Zeiteinheit-Leistungsverbrauch-Aufzeichnungsmittel (7), in welchem ein Leistungsverbrauch pro Zeiteinheit aufzeichnet wird, wenn der Passagierbeförderer (15) ohne Last in dem Beförderungsbetriebsmodus betrieben wird;
wobei das Energiesparbetriebs-elektrische-Leistung-Integrierungsmittel (8) die elektrische Energie während der Periode, in welcher der Passagierbeförderer (15) in dem Energiesparbetrieb betrieben wird, integriert;
und wobei das Leistungsverbrauchberechnungsmittel (10) eine Energiesparmenge aus einem Wert berechnet, erlangt durch Subtrahieren einer durch das Energiesparbetriebelektrische Leistung-Integrierungsmittel (8) integrierten elektrischen Energie von einem Wert, erlangt durch Multiplizieren der akkumulierten Zeit durch das Betriebszeit-Akkumulierungsmittel (9) mit dem Leistungsverbrauch, aufgezeichnet in dem Zeiteinheit-Leistungsverbrauch-Aufzeichnungsmittel (7).

8. Steuereinrichtung für einen Passagierbeförderer nach Anspruch 1, ferner umfassend:
ein Zeiteinheit-Leistungsverbrauch-Aufzeichnungsmittel (7), in welchem ein Leistungsverbrauch pro Zeiteinheit, wenn der Passagierbeförderer (15) ohne Last im Beförderungsbetriebsmodus betrieben wird, zusammen mit einem Leistungsverbrauch pro Zeiteinheit, wenn es im Betrieb in dem Energiesparbetrieb ist, aufgezeichnet wird;
wobei das Leistungsverbrauchberechnungsmittel (10) als die Energiesparmenge einen Wert berechnet, erlangt durch Subtrahieren eines Werts, erlangt durch Multiplizieren des Energiesparbetriebsleistungsverbrauchs mit der akkumulierten Zeit durch das Energiespar-Betriebszeit-Akkumulierungsmittel (9), durch den Wert, erlangt durch Multiplizieren des Beförderungsbetriebsleistungsverbrauchs ohne Last mit der akkumulierten Zeit durch das Energiespar-Betriebszeit-Akkumulierungsmittel (9).

## Revendications

1. Dispositif de commande pour un escalier roulant pour mettre en oeuvre un escalier roulant (15) dans un mode de fonctionnement en transport qui déplace de façon circulaire des marches agencées sans fin (22) dudit escalier roulant (15) à une vitesse nominale depuis un côté seuil (16a) jusqu'à l'autre côté seuil (16b), et dans un mode de fonctionnement économe en énergie qui déplace de façon circulaire lesdites marches (22) avec moins d'énergie électrique que dans le mode de fonctionnement en transport, comprenant :
un moyen de détection d'usager (1) pour détecter des usagers (27) au niveau desdits côtés seuil (16a, 16b) ;
un moyen de paramétrage de temps de fonctionnement (2) pour paramétrer un premier temps prédéterminé (T1) pour commander le temps de fonctionnement dans ledit mode de fonctionnement en transport pour qu'il soit plus long qu'une quantité de temps nécessaire pour transporter ledit usager dans ledit mode de fonctionnement en transport depuis ledit côté seuil (16a) jusqu'audit autre côté seuil (16b) ;
un moyen de sélection de mode de fonctionnement. (3) qui sélectionne :
normalement ledit mode de fonctionnement économe en énergie ;
ledit mode de fonctionnement en transport pendant ledit premier temps prédéterminé (T1) en commutant depuis ledit mode de fonctionnement économe en énergie lorsque ledit moyen de détection d'usager (1) détecte un usager (27) ;
ledit mode de fonctionnement en transport nouvellement pendant ledit premier temps prédéterminé (T1) dans le cas où ledit usager est détecté pendant la mise en oeuvre dans ledit mode de fonctionnement en transport ; et
ledit mode de fonctionnement économe en énergie en commutant depuis ledit mode de fonctionnement en transport au moment où ledit premier temps prédéterminé s'écoule dans le cas où aucun dit usager n'est nouvellement détecté avant l'écoulement dudit premier temps prédéterminé (T1) ; et
un moyen de mise en oeuvre (4) pour mettre en oeuvre ledit escalier roulant (15) dans le mode sélectionné par le moyen de sélection de mode de fonctionnement (3),
**caractérisé en ce que**
le dispositif de commande comprend en outre un moyen de mesure (6, 8, 9, 10) pour mesurer des conditions de fonctionnement de chacun desdits modes de fonctionnement séparément, le moyen de mesure comprenant un moyen (8) pour intégrer l'énergie électrique dans le fonctionnement économe en énergie, un moyen d'accumulation de temps de fonctionnement par mode (9), un moyen (6) pour mesurer le nombre de changements de fonctionnement, et un moyen de calcul de consommation électrique (10).

2. Dispositif de commande pour un escalier roulant selon la revendication 1, dans lequel le mode de fonctionnement économe en énergie comprend l'un ou l'autre de :
un mode de fonctionnement à faible vitesse qui déplace de façon circulaire des marches (22) d'un côté seuil (16a) à l'autre côté seuil (16b) à une vitesse plus basse que la vitesse nominale ; ou
un mode d'attente qui arrête le mouvement circulaire desdites marches (22).

3. Dispositif de commande pour un escalier roulant selon la revendication 1, dans lequel :
le fonctionnement économe en énergie est composé d'un mode de fonctionnement à vitesse basse qui déplace de façon circulaire des marches (22) d'un côté seuil (16a) à l'autre côté seuil (16b) à une vitesse plus basse que la vitesse nominale et d'un mode d'attente qui arrête le mouvement circulaire desdites marches (22) ;
le moyen de paramétrage de temps de fonctionnement (2) paramètre un second temps prédéterminé (T2) pour commander le temps de fonctionnement dans ledit fonctionnement à vitesse basse en plus de paramétrer le premier temps prédéterminé (T1) pour commander le temps de fonctionnement dans le mode de fonctionnement en transport ;
le moyen de sélection de mode de fonctionnement (3) sélectionne :
normalement le mode de fonctionnement économe en énergie ;
lorsque le dispositif de détection d'usager (1) détecte un usager, ledit mode de transport en commutant depuis ledit mode de fonctionnement économe en énergie, et ledit mode de fonctionnement en transport nouvellement pendant ledit premier temps prédéterminé (T1) quand il est mis en oeuvre dans ledit mode de fonctionnement en transport ;
ledit mode de fonctionnement à vitesse basse pendant ledit second temps prédéterminé (T2) en commutant depuis ledit mode de fonctionnement en transport au moment où ledit premier temps prédéterminé (T1) s'écoule dans le cas où aucun dit usager (27) n'est nouvellement détecté avant l'écoulement dudit premier temps prédéterminé (T1) ; et
ledit mode d'attente en commutant depuis ledit fonctionnement à vitesse basse au moment où ledit second temps prédéterminé (T2) s'écoule dans le cas où ledit usager (27) n'est pas nouvellement détecté avant l'écoulement dudit second temps prédéterminé (T2).

4. Dispositif de commande pour un escalier roulant selon la revendication 1, dans lequel :
le mode de fonctionnement économe en énergie est composé de :
un mode de fonctionnement à vitesse basse qui déplace de façon circulaire des marches (22) à une vitesse inférieure à la vitesse nominale ;
un mode d'attente qui arrête le mouvement circulaire desdites marches (22) ; et
un mode de fonctionnement en avertissement qui avertit un ou des usager(s) dans le sens opposé au sens de transport en déplaçant de façon circulaire lesdites marches (22) dans le sens de transport ; et
le moyen de paramétrage de temps de fonctionnement (2) paramètre le second temps prédéterminé (T2) qui commande le temps de mise en oeuvre dudit fonctionnement à vitesse basse en plus de paramétrer le premier temps prédéterminé (T1) qui commande la durée du premier temps prédéterminé (T1) ;
le moyen de sélection de mode de fonctionnement (3) sélectionne :
normalement le fonctionnement économe en énergie ;
ledit mode de fonctionnement en transport en commutant depuis ledit mode économe en énergie dans le cas où le moyen de détection d'usager (1) détecte un usager (27) ; et
ledit mode de fonctionnement en transport nouvellement pendant ledit premier temps prédéterminé (T1) dans le cas où le dispositif de détection d'usager (1) détecte un usager (27) pendant ledit fonctionnement en transport ;
ledit mode de fonctionnement à vitesse basse pendant ledit second temps prédéterminé (T2) en commutant depuis ledit mode de fonctionnement en transport au moment où ledit premier temps prédéterminé (T1) s'écoule dans le cas où aucun dit usager (27) n'est nouvellement détecté avant l'écoulement dudit premier temps prédéterminé (T1) ;
ledit mode d'attente en commutant dudit mode de fonctionnement à vitesse basse au moment où ledit second temps prédéterminé (T2) s'écoule dans le cas où aucun dit usager n'est nouvellement détecté avant l'écoulement dudit second temps prédéterminé (T2) ; et
le mode de fonctionnement en avertissement dans le cas où un usager (27) dans le sens opposé au sens de transport de mouvement circulaire desdites marches (22) est détecté pendant l'arrêt dans ledit mode d'attente.

5. Dispositif de commande pour un escalier roulant selon la revendication 1, dans lequel :
le mode de fonctionnement économe en énergie est composé de :
un mode de fonctionnement à vitesse basse qui déplace de façon circulaire des marches (22) à une vitesse inférieure à la vitesse nominale ;
un mode d'attente qui arrête le mouvement circulaire desdites marches (22) ; et
un mode de fonctionnement en avertissement qui avertit des usagers (27) dans le sens opposé au sens de transport en déplaçant de façon circulaire lesdites marches (22) dans le sens de transport ; et
le moyen de mesure est un moyen d'accumulation de temps de fonctionnement par mode (9) qui accumule séparément les temps mis en oeuvre dans le mode de fonctionnement en transport et chacun desdits modes de fonctionnement économe en énergie.

6. Dispositif de commande pour un escalier roulant selon la revendication 1, dans lequel :
le mode de fonctionnement économe en énergie est composé de :
un mode de fonctionnement à vitesse basse qui déplace de façon circulaire des marches (22) à une vitesse plus basse que la vitesse nominale ;
un mode d'attente qui arrête le mouvement circulaire desdites marches (22) ; et
un mode de fonctionnement en avertissement qui avertit des usagers (27) dans le sens opposé au sens de transport en déplaçant de façon circulaire lesdites marches (22) dans le sens de transport ; et
le moyen de mesure est un moyen de mesure de fréquence de changement de fonctionnement par mode (6) qui mesure le nombre de fois de changements de fonctionnement des modes de fonctionnement en transport et chacun desdits autres modes de fonctionnement.

7. Dispositif de commande pour un escalier roulant selon la revendication 1, comprenant en outre :
un moyen d'enregistrement de consommation électrique par unité de temps (7) dans lequel on enregistre une consommation électrique par unité de temps lorsque ledit escalier roulant (15) sans charge est mis en oeuvre dans le mode de fonctionnement en transport ;
dans lequel ledit moyen d'intégration d'énergie électrique en fonctionnement économe en énergie (8) intègre l'énergie électrique pendant la période où ledit escalier roulant (15) est mis en oeuvre dans ladite mise en oeuvre économe en énergie ;
et dans lequel ledit moyen de calcul de consommation électrique (10) calcule une quantité d'économie d'énergie à partir d'une valeur obtenue en soustrayant une énergie électrique intégrée par ledit moyen d'intégration d'énergie électrique en fonctionnement économe en énergie (8), d'une valeur obtenue en multipliant le temps accumulé par ledit moyen d'accumulation de temps de fonctionnement (9) par la consommation électrique enregistrée dans ledit moyen d'enregistrement de consommation électrique par unité de temps (7).

8. Dispositif de commande pour un escalier roulant selon la revendication 1 comprenant en outre :
un moyen d'enregistrement de consommation électrique par unité de temps (7) dans lequel on enregistre une consommation électrique par unité de temps lorsque ledit escalier roulant (15) sans charge est mis en oeuvre dans un mode de fonctionnement en transport en même temps qu'une consommation électrique par unité de temps lors d'une mise en oeuvre dans ledit fonctionnement économe en énergie ;
dans lequel ledit moyen de calcul de consommation électrique (10) calcule en tant que quantité d'économie d'énergie une valeur obtenue en soustrayant une valeur obtenue en multipliant ladite consommation électrique en fonctionnement économe en énergie par le temps accumulé par ledit moyen d'accumulation de temps de fonctionnement (9), par la valeur obtenue en multipliant ladite consommation électrique en fonctionnement en transport sans charge par le temps accumulé par ledit moyen d'accumulation de temps de fonctionnement économe en énergie (9).
